# EUROPEAN PATENT APPLICATION

(11) **EP 1 510 901 A2**
(43) Date of publication of application: **02.03.2005**
(21) Application number: 04019629.7
(22) Date of filing: 18.08.2004
(51) Int. Cl.: G06F 1/00

(54) **Secure data management apparatus**

(30) Priority: 29.08.2003 JP 2003307863
(71) Applicant: MATSUSHITA ELECTRIC INDUSTRIAL CO., LTD., Kadoma-shi, Osaka 571-8501 (JP)
(72) Inventor: Naka, Ken, Ota-ku Tokyo 144-0046 (JP); Takayama, Hisashi, Setagaya-ku Tokyo 156-0043 (JP); Takekawa, Hiroshi, Ota-ku Tokyo 144-0046 (JP)
(74) Representative: Grünecker, Kinkeldey, Stockmair & Schwanhäusser Anwaltssozietät

(57) **Abstract**

A secure data management apparatus capable of improving reliability and certainty of synchronization processing with the server, security of data, and reliability of time, and performing data management with high reliability and high security. In the apparatus, a data management card application (301) on an IC card (102) issues MTA (Master Trusted Agent) (200) that is a terminal application operating on the terminal (101) to the terminal (101). The MTA (200) embeds authentication information in the code of the data management application (201) that is a terminal application for executing data synchronization processing with a server (103) to start up the data management application (201). Based on the authentication information, the data management card application (301) authenticates the data management application (201), and the data management application (201) stores target data of the synchronization processing in the IC card (102). Based on the target data stored in the IC card (102), the data management application (201) performs the synchronization processing with the server (103).

## Description

### BACKGROUND OF THE INVENTION

### 1. Field of the Invention

The present invention relates to a secure device such as an IC card that holds data securely, and an information processing terminal such as a cellular telephone, PDA(PersonalDigitalAssistance) and personal computer provided with the secure device.

### 2. Description of Related Art

Systems have conventionally been used widely for assisting business operation in fields using a computer and/or portable terminal device. In such circumstances, a system has become widespread such that part of a database is stored in a portable terminal device so as to enable business assistance operation under offline environments, from the viewpoints of saving of communication cost required for online-connecting to the database server and convenience under offline environments. As an example, there is a conventional technique as described in Japanese Laid-Open Patent Publication H11-175596.

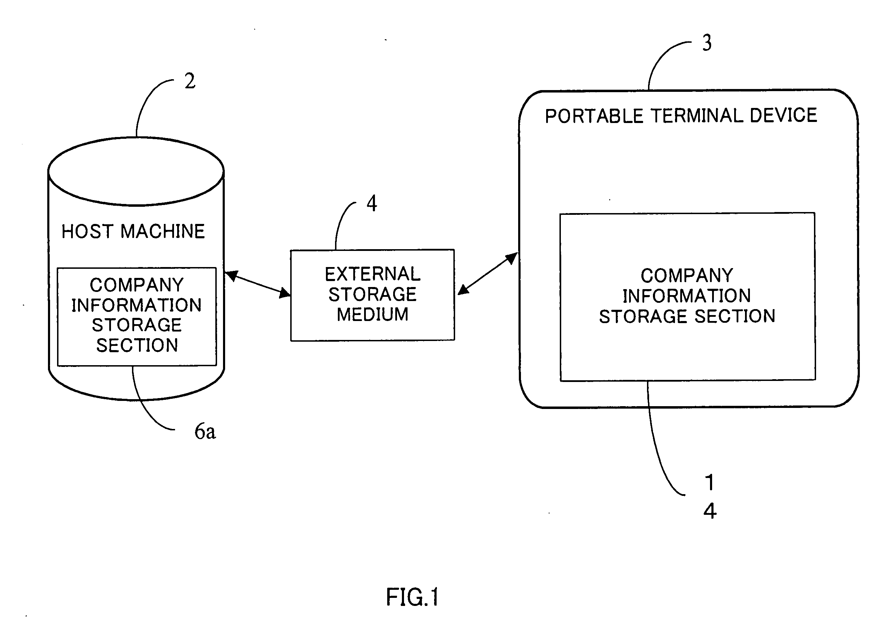

FIG. 1 illustrates a block diagram of a configuration of the conventional technique. In this system, host machine 2 and portable terminal device 3 are respectively provided with company information storage sections 6a and 14, and configured to enable the stored business information to be exchanged with each other. Host machine 2 stores the business information used in the business assistance operation in company information storage section 6a. Portable terminal device 3 performs synchronization processing with host machine 2 via an external storage medium 4 such as a floppy (R) , and stores the business information of company information storage section 6a of host machine 2 in company information storage section 14 in portable terminal device 3. By referring to business information storage section 14, portable terminal device 3 is capable of referring to the business information to use in the business assistance operation by itself.

Further, using the conventional technique, the host machine and portable terminal device are connected via networks, instead of using external storage media, and perform synchronization processing with each other, and the portable terminal device stores in its company information storage section part of business information stored in the company information storage section of the host machine, and by referring to the business information stored in the company information storage section, is capable of performing the business assistance operation in offline.

However, in the conventional technique as described above, since business information such as customer lists is stored in portable terminal device 3, there have been cases of suffering significant damage such as, for example, cases that customer data leaks outside due to the fact that portable terminal device 3 is stolen or lost, and that a staff member who manages portable terminal device 3 leaks confidential information on purpose. Further, there have been cases that the synchronization processing cannot be executed with reliability due to spoofing of unauthorized application. Furthermore, there have been cases that even when the synchronization processing can be executed with reliability, old data is copied in advance and exchanged with new data to cause the old data that should be deleted to be referred to, and thus customer information is referred to. Moreover, the technique is not capable of overcoming cases that the current time used in the synchronization processing is set at time within an expiration date by tuning the clock of the terminal back, the processing is thus executed with the expiration date regarded as being not expired, and that it is made possible to continue to use the data and application whose expiration dates are expired.

### SUMMARY OF THE INVENTION

It is an object of the present invention to provide a secure data management apparatus capable of improving reliability and certainty of processing, security of data, and reliability of time, and performing data management with higher reliability and higher security.

According to an aspect of the invention, a secure data management apparatus is comprised of a secure device that executes storage and calculation of data in a confidential state, and an information processing terminal to which the secure device is attached, where the secure device has a card processing module that issues to the information processing terminal an application for controlling startup of an application that operates on the information processing terminal, and a card storage device that stores data of the application, the information processing terminal has a storage device that stores actual data and data of a data management application that manages the actual data, and starts up the application issued by the secure device, the application initiated and the secure device mutually perform authentication, the application authenticated by the secure device starts up the data management application, the data management application initiated and the secure device mutually perform authentication, and the data management application authenticated by the secure device performs synchronization processing of the actual data with an external server.

According to another aspect of the invention, a secure data management apparatus is comprised of a secure device that executes storage and calculation of data in a confidential state, and an information processing terminal to which the secure device is attached, where the secure device has a card processing module that issues to the information processing terminal an application for controlling startup of an application that operates on the information processing terminal, and a card storage device that stores data of the application, the application has a time acquisition section that acquires current time from a server on a network, and a time count section that counts current time on the information processing terminal, the information processing terminal starts up the application issued by the secure device, the application initiated and the secure device mutually perform authentication, the time acquisition section of the application authenticated by the secure device acquires the current time from the server to set the time count section, and the time indicated by the time count section is set as the current time.

According to still another aspect of the invention, a secure data management apparatus is comprised of a secure device that executes storage and calculation of data in a confidential state, and an information processing terminal to which the secure device is attached, where the secure device has a card processing module that issues to the information processing terminal an application for controlling startup of an application that operates on the information processing terminal, and a secure storage device that stores data of the application, actual data and data of a data management application that manages the actual data, the information processing terminal starts up the application issued by the secure device, the application initiated and the secure device mutually perform authentication, the application authenticated by the secure device starts up the data management application, the data management application initiated and the secure device mutually perform authentication, and the data management application authenticated by the secure device performs synchronization processing of the actual data with an external server.

### BRIEF DESCRIPTION OF THE DRAWINGS

The above and other objects and features of the invention will appear more fully hereinafter from a consideration of the following description taken in connection with the accompanying drawing wherein one example is illustrated by way of example, in which;
FIG.1 is a block diagram of the conventional technique;
FIG.2 is a diagram illustrating a system configuration of a secure data management apparatus in Embodiment 1 of the invention;
FIG.3 is a block diagram illustrating a configuration of a terminal in Embodiment 1 of the invention;
FIG.4 is a block diagram illustrating a configuration of an IC card in Embodiment 1 of the invention;
FIG.5 is a diagram illustrating general outlines of processing in the secure data management apparatus in Embodiment 1 of the invention;
FIG.6 is a sequence diagram illustrating an MTA startup flow in Embodiment 1 of the invention;
FIG.7 is a sequence diagram illustrating an application startup flow based on judgment of the MTA in Embodiment 1 of the invention;
FIG.8 is a sequence diagram illustrating an application startup flow based on request operation of a user in Embodiment 1 of the invention;
FIG.9 is a sequence diagram illustrating a flow to connect to a server in Embodiment 1 of the invention;
FIG.10 is a sequence diagram illustrating a target data determination flow in Embodiment 1 of the invention;
FIG.11 is a sequence diagram illustrating a data synchronization processing flow in Embodiment 1 of the invention;
FIG.12 is a sequence diagram illustrating a data urgent deletion flow in Embodiment 1 of the invention;
FIG.13 is a sequence diagram illustrating a flow of expiration date expired data deletion in Embodiment 1 of the invention;
FIG.14 is a diagram illustrating a format of data policy data in Embodiment 1 of the invention;
FIG.15 is a diagram illustrating a specific example of the data policy data in Embodiment 1 of the invention;
FIG.16 is a diagram illustrating the data policy of FIG.15 expressed in data structure in Embodiment 1 of the invention;
FIG.17 is a diagram illustrating a format of component data in Embodiment 1 of the invention;
FIG.18 is a diagram illustrating a specific example of the component data in Embodiment 1 of the invention;
FIG.19 is a diagram illustrating another specific example of the component data in Embodiment 1 of the invention;
FIG.20 is a diagram illustrating the component data of FIG.18 expressed in data structure in Embodiment 1 of the invention;
FIG.21 is a diagram illustrating the component data of FIG.19 expressed in data structure in Embodiment 1 of the invention;
FIG.22 is a diagram illustrating a format of target data in Embodiment 1 of the invention;
FIG.23 is a diagram illustrating a specific example of the target data in Embodiment 1 of the invention;
FIG.24 is a diagram illustrating the target data of FIG.23 expressed in data structure in Embodiment 1 of the invention;
FIG.25 is a diagram illustrating startup application list data in Embodiment 1 of the invention;
FIG.26 is a diagram illustrating a specific example of the startup application list data in Embodiment 1 of the invention;
FIG.27 is a diagram illustrating the startup application list data of FIG.26 expressed in data structure in Embodiment 1 of the invention;
FIG.28 is a diagram illustrating last update date data in Embodiment 1 of the invention;
FIG.29 is a diagram illustrating a specific example of the last update date data in Embodiment 1 of the invention;
FIG.30 is a diagram illustrating the last update date data of FIG.29 expressed in data structure in Embodiment 1 of the invention;
FIG.31 is a sequence diagram illustrating a time acquisition and storage flow in Embodiment 1 of the invention;
FIG.32 is a diagram illustrating a system configuration of a secure data management apparatus in Embodiment 2 of the invention;
FIG.33 is a block diagram illustrating a configuration of a terminal in Embodiment 2 of the invention;
FIG.34 is a block diagram illustrating a configuration of a secure data management card in Embodiment 2 of the invention;
FIG.35 is a diagram illustrating general outlines of processing in a secure data management apparatus in Embodiment 2 of the invention;
FIG.36 is a sequence diagram illustrating a data synchronization processing flow in Embodiment 2 of the invention;
FIG.37 is a sequence diagram illustrating a data urgent deletion flow in Embodiment 2 of the invention;
FIG.38 is a sequence diagram illustrating a flow of expiration date expired data deletion in Embodiment 2 of the invention;
FIG.39 is a diagram illustrating a format of component data in Embodiment 2 of the invention;
FIG.40 is a diagram illustrating a specific example of the component data in Embodiment 2 of the invention;
FIG.41 is a diagram illustrating another specific example of the component data in Embodiment 2 of the invention;
FIG.42 is a diagram illustrating the component data of FIG.40 expressed in data structure in Embodiment 2 of the invention;
FIG.43 is a diagram illustrating the component data of FIG.41 expressed in data structure in Embodiment 2 of the invention;
FIG.44 is a sequence diagram illustrating an application startup flow based on judgment of MTA in Embodiment 2 of the invention; and
FIG.45 is a sequence diagram illustrating an application startup flow based on request operation of a user in Embodiment 2 of the invention.

### DESCRIPTION OF THE PREFERRED EMBODIMENTS

Embodiments of the present invention will be specifically described below with reference to accompanying drawings.

### (Embodiment 1)

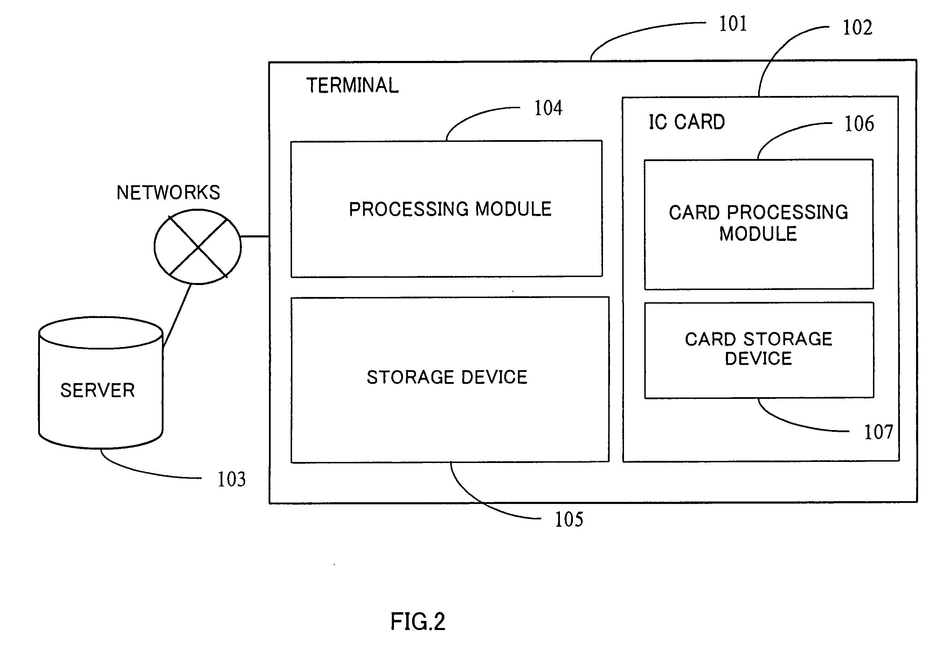

FIG.2 is a diagram illustrating a system configuration of a secure data management apparatus in Embodiment 1 of the present invention.

The secure data management apparatus is comprised of terminal 101, IC card 102 and server 103, and is an apparatus to securely manage data used in terminal 101. A plurality of terminals 101 may exist.

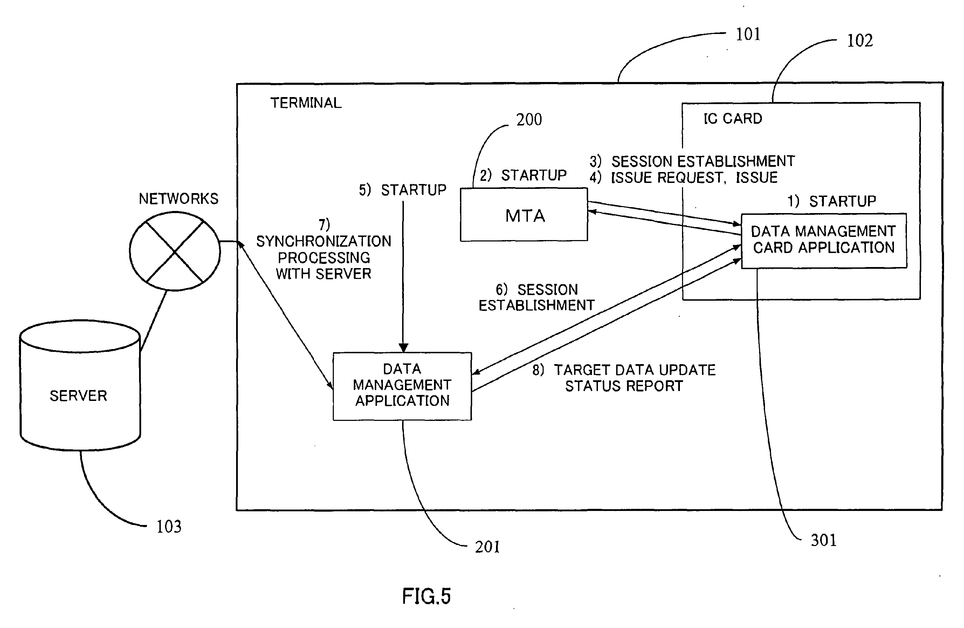

FIG.5 illustrates general outlines of processing in the secure data management apparatus.

The secure data management apparatus uses a mechanism that IC card 102 starts up on terminal 101 MTA (Master Trusted Agent) 200 that is a trusted application, and the MTA 200 further starts up an application that is trusted on terminal 101. In this Embodiment, data management application 201 is initiated as an application to start up on terminal 101. In addition, a mechanism for starting up a reliable application using MTA 200 will be specifically described later.

Data management application 201 is an application which communicates with IC card 102 and server 103 where a database server is operating, and acquires synchronization of data on the terminal. As specific examples of data to handle, for example, customer lists, contract information and price tables are assumed when the terminal is a business assistance terminal, while content such as music and moving pictures is assumed when the terminal is an information home-use terminal.

A processing flow will be described below.

When a power supply of terminal 101 is turned on, and IC card 102 is inserted or already installed into/with terminal 101, terminal 101 selects data management card application 301 of IC card 102, and data management card application 301 starts up (FIG.5-1)).

Data management card application 301 issues MTA 200 to terminal 101, and in terminal 101 having received a code of MTA 200, MTA 200 issued from data management card application 301 starts up (FIG.5-2) ) . MTA 200 performs authentication with data management card application 301, and establishes a reliable session (FIG.5-3)).

Next, MTA 200 checks a state of terminal 101. In this case, since data management application 201 does not start up, MTA 200 makes a request for an issue of data management application 201 to data management card application 301. Data management card application 301 issues data management application 201 to MTA 200 (FIG.5-4)). MTA 200 having received the issue starts up data management application 201 (FIG.5-5)). At this point, data management application 201 performs authentication with data management card application 301, and establishes a reliable session (FIG.5-6)).

Initiated data management application 201 executes pre-processing of synchronization and synchronization processing with server 103 when necessary (FIG.5-7)). Data management application 201 notifies data management card application 301 of results of the pre-processing of synchronization and synchronization processing (FIG.5-8)).

The general outlines of the processing in the secure data management apparatus are as described in the foregoing. The aforementioned processing is executed at following four timings: for example, i) the processing is executed at regular time intervals based on the setting that the processing is executed at 9AM once a day; ii) the processing is executed when a CPU load rate is low while monitoring a state of operation of the application in terminal 101; iii) the processing is executed when IC card 102 is inserted into terminal 101; iv) the processing is executed when a user requests a start of processing by pressing a synchronization button (button for requesting to start synchronization processing) from GUI.

An internal configuration of terminal 101 will be described below.

As shown in FIG.2, terminal 101 is comprised of processing module 104 and storage device 105.

Assumed as terminal 101 are a cellular telephone and personal computer installable with a secure device such as an IC card.

In the case of the cellular telephone, for example, processing module 104 in terminal 101 is provided with a CPU, storage memory (ROM and RAM) , antenna to communicate with the outside, RF section, wireless communication control circuit, and slot to communicate with IC card 102. Flash memory or the like is provided as the storage device. In ROM is stored software such as an OS and Java(R)VM. The software being executed on the CPU using RAM implements processing module 104 that executes various applications.

In the case of the personal computer, processing module 104 in terminal 101 is provided with a CPU, storage memory (ROM and RAM) , modem to communicate with the outside, slots for PCI card and SD card to which a network card and IC card 102 are inserted to communicate, etc. An HDD is provided as the storage device. In ROM and HDD is stored software such as an OS and Java (R) VM. The software being executed on the CPU using RAM implements processing module 104 that executes various applications.

An internal configuration of IC card 102 will be described below.

As shown in FIG.2, IC card 102 is comprised of card processing module 106 and card storage device 107.

Card processing module 106 of IC card 102 is comprised of a CPU, storage memory (ROM and RAM), and host interface (I/F) to communicate with the terminal, and card storage device 107 is comprised of non-volatile memory such as EEPROM. IC card 102 is provided with tamper-resistance as a whole, and designed not to directly gain access to the inside of the IC card.

Server 103 is a server computer apparatus, and a database server is operating as an application.

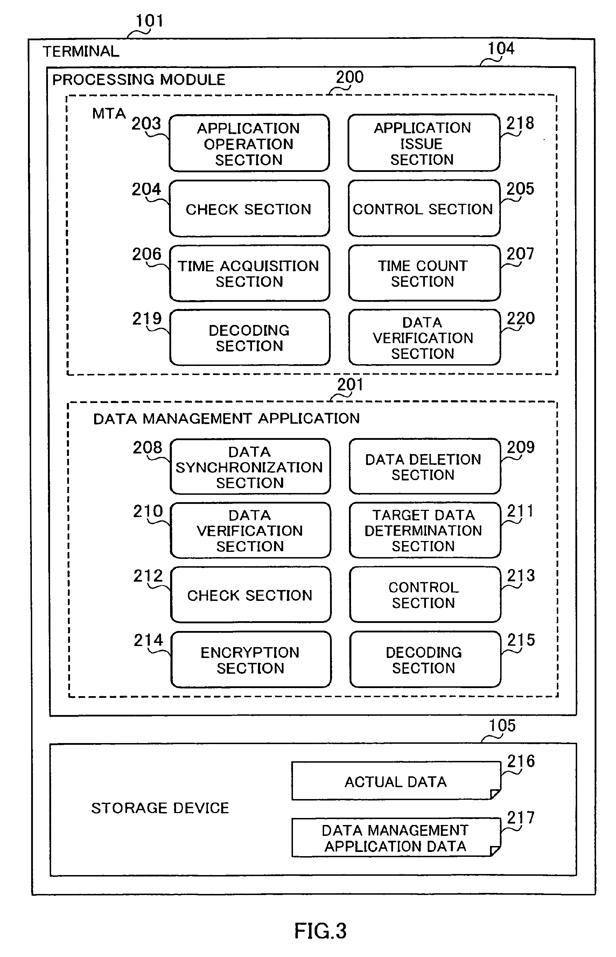

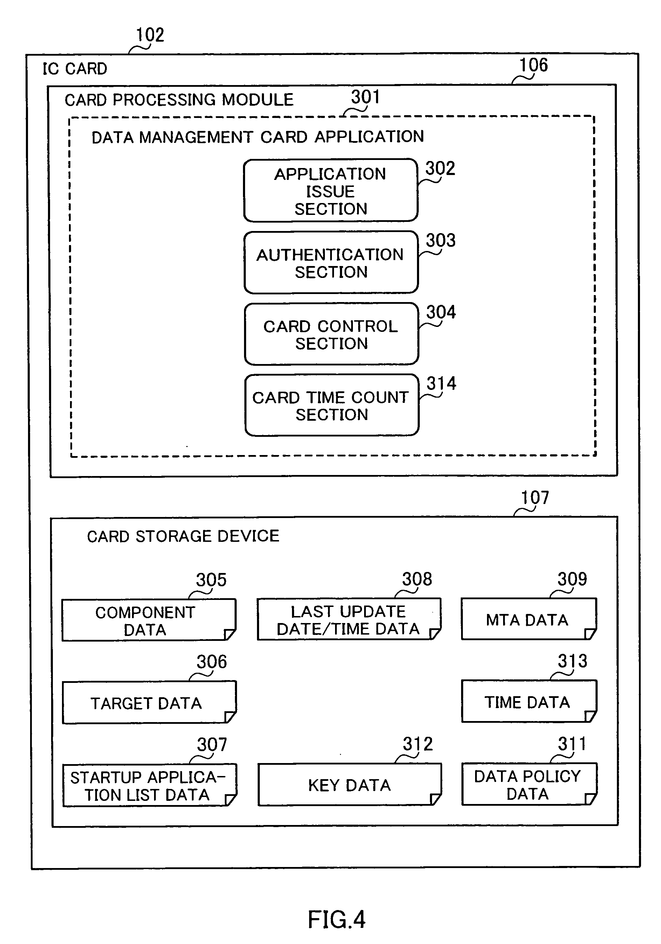

FIGs.3 and 4 show block diagrams to illustrate details of the secure data management apparatus in Embodiment 1.

FIG.3 is a block diagram of terminal 101. FIG.4 is a block diagram of IC card 102.

Processing module 104 of terminal 101 is provided with functions for executing various applications, communicating with server 103 via networks, and communicating with IC card 102.

In Embodiment 1, processing module 104 executes MTA 200 and data management application 201 as the applications.

MTA 200 operates on terminal 101 as an application trusted in IC card 102, and corresponding to a state of terminal 101, performs startup of an application and acquisition and count of trusted time.

MTA 200 is comprised of application operation section 203, check section 204, control section 205, time acquisition section 206, time count section 207, application issue section 218, decoding section 219 and data verification section 220.

MTA 200 will be described specifically later.

Data management application 201 is started by MTA 200, operates on terminal 101 as an application trusted in IC card 102, and communicates with server 103 to acquire synchronization of data, while managing data in terminal 101.

Data management application 201 is comprised of data synchronization section 208, data deletion section 209, data verification section 210, target data determination section 211, check section 212, control section 213, encryption section 214 and decoding section 215.

Storage device 105 is a device to store data.

In Embodiment 1, storage device 105 stores actual data 216 that data management application 201 manages and data management application data 217 that is an actual code of data management application 201.

Card processing module 106 in IC card 102 is provided with functions for executing various applications on card 102, and communicating with terminal 101.

In Embodiment 1, card processing module 106 executes data management card application 301 as a card application.

Data management card application 301 is comprised of application issue section 302, authentication section 303, card control section 304 and card time count section 314.

Card storage device 107 is a device to store data in IC card 102.

In Embodiment 1, card storage device 107 stores component data 305, target data 306, startup application list data 307, last update date/time data 308, MTA data 309, data policy data 311, key data 312 and time data 313.

Data will be described below.

Actual data 216 is data managed by the secure data management apparatus of the invention with security. Actual data 216 is managed by data management application 201, and encrypted and managed with an ID when stored in storage device 105. A plurality of items of actual data 216 exists. Examples of specific content of the data include a customer list, contract information, price table, operation manual and application.

Data management application data 217 is data (actual code) before starting up data management application 201 that is an application operating on processing module 104 in terminal 101, and encrypted and stored in storage device 105.

Component data 305 is data describing information on actual data 216 and data management application data 217. Described in component data 305 are an identifier ID indicating which actual data 216 has information of the data 305, information indicative of a key used in encrypting the actual data 216, hash value calculated from the actual data 216, type information indicative of a type of the data, information indicative of expiration date/time of the actual data 216, date/time information indicating when the actual data 216 was updated, and a method used in updating the actual data 216.

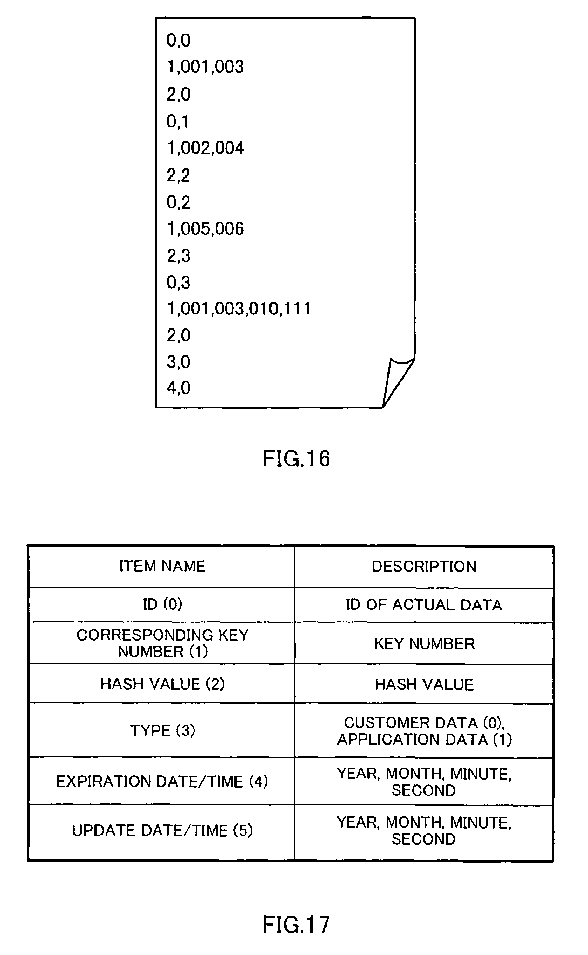

Specific examples of component data 305 will be described below with reference to FIGs. 17 to 21.

FIG.17 shows the content of each item described in the component data. As items, there are an ID, corresponding key number, hash value, type, expiration date/time, and update date/time. Each numeral inside parentheses is a value to express in data.

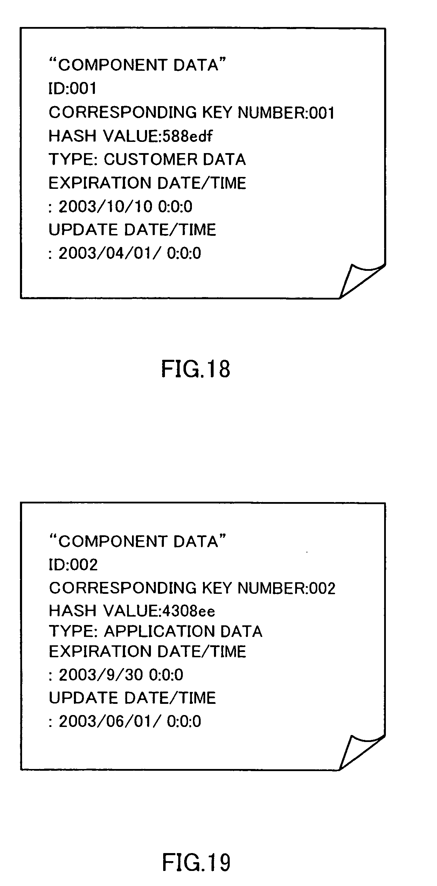

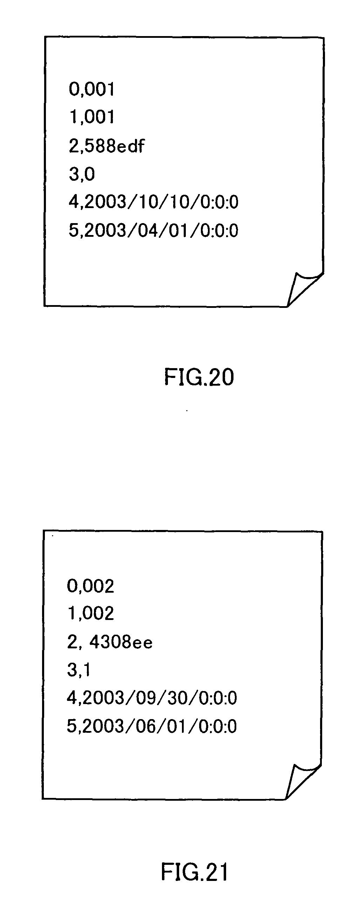

For example, FIG.20 shows actual data expressing the content as shown in FIG.18, while FIG.21 shows actual data expressing the content as shown in FIG.19.

In this Embodiment, actual data 216 is stored in storage device 105 in terminal 101, while component data 305 is stored in card storage device 107 in IC card 102.

In view of the fact that it has not conventionally been possible to detect even tampering when data stored in terminal 101 is exchanged with old data, tampering can be detected by storing only required minimum data in tamper-resist IC card 102 to use.

Target data 306 is data to manage data targeted for synchronization processing and a state of the synchronization processing, and includes an identifier ID of data targeted for synchronization and deletion, information indicating whether the processing has been completed, date/time information indicating when the processing was started, another date/time information indicating when the processing was suspended, and the other date/time information indicating when the processing was finished which is recorded for each processing.

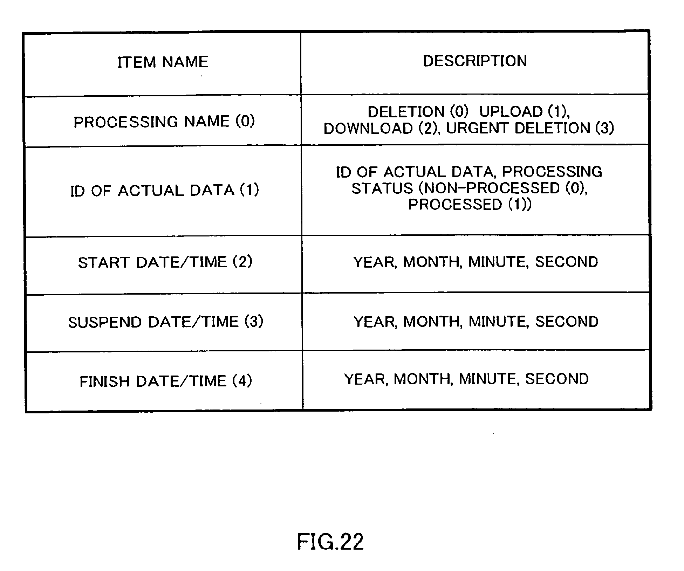

Specific examples of target data 306 will be described below with reference to FIGs.22 to 24.

FIG.22 shows the content of each item described in the target data. As items, there are a processing name, ID (a state of the processing is also expressed in this content) of actual data, start date, suspension date, and finish date. Each numeral inside parentheses is a value expressed in data.

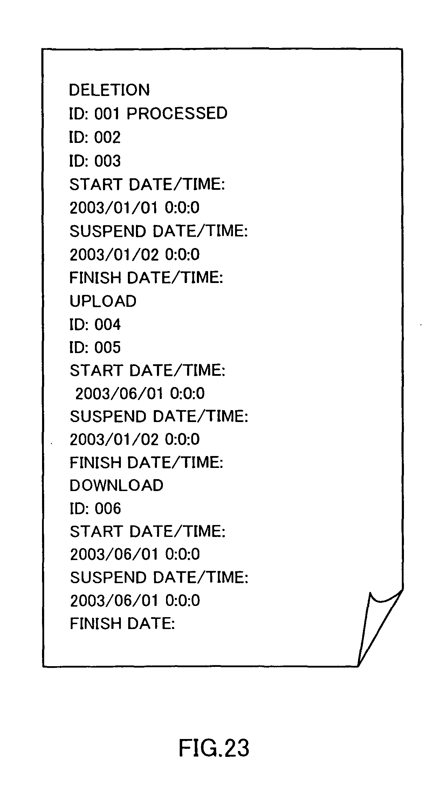

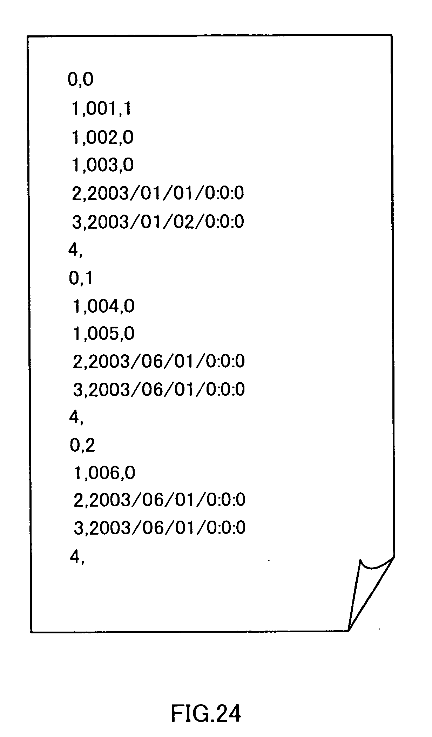

For example, FIG.24 shows actual data expressing the content as shown in FIG.23.

Startup application list data 307 is data indicative of a list of applications that processing module 104 should start up during the time terminal 101 is activated.

Startup application list data 307 also indicates urgent deletion flag information indicative of whether or not to urgently delete data.

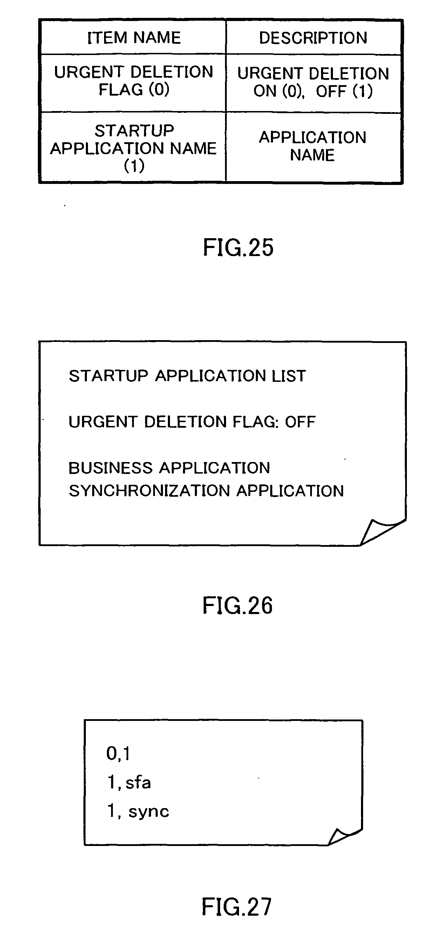

Specific examples of startup application list data 307 will be described with reference to FIGs.25 to 27.

FIG.25 shows the content of each item described in the startup application list data. As items, there are an urgent deletion flag and startup application name. Each numeral inside parentheses is a value expressed in data.

For example, FIG.27 shows actual data expressing the content as shown in FIG.26.

IC card 102 manages applications to be started in terminal 101, andMTA 200 starts up a required application corresponding to a state of terminal 101, whereby processing to manage data in terminal 101 is reliably executed.

Last update date/time data 308 is data describing date/time information indicating when target data 306 was last updated. Since it is not necessary to acquire update information once acquired from server 103 every connection, it is possible to reduce communication cost. Further, since it is only required to check a last updated portion, it is possible to fast execute processing for determining a target.

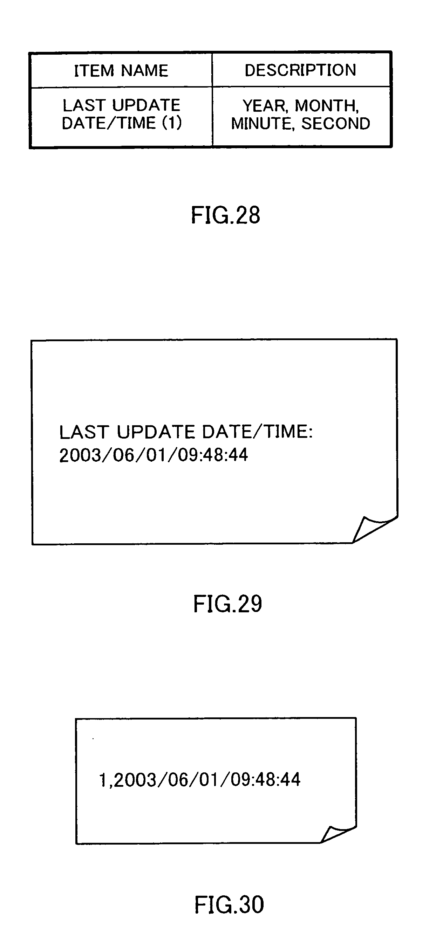

Specific examples of last update date/time information 308 will be described below with reference to FIGs.28 to 30.

FIG.28 shows the content of each item described in the last update date/time data. As an item, there is a last update date and time. Each numeral inside parentheses is a value expressed in data.

For example, FIG.30 shows actual data expressing the content as shown in FIG.29.

MTA data 309 is original data (execution code) of MTA 200 that is an application operating on processing module 104 in terminal 101. MTA 200 is started by data management card application 301 issuing the MTA to terminal 101 from MTA data 309.

Data policy data 311 is data describing information of a priority of actual data in each processing, and priority criterion information at the collision time a plurality of processing such as deletion and synchronization is executed on the same actual data 216.

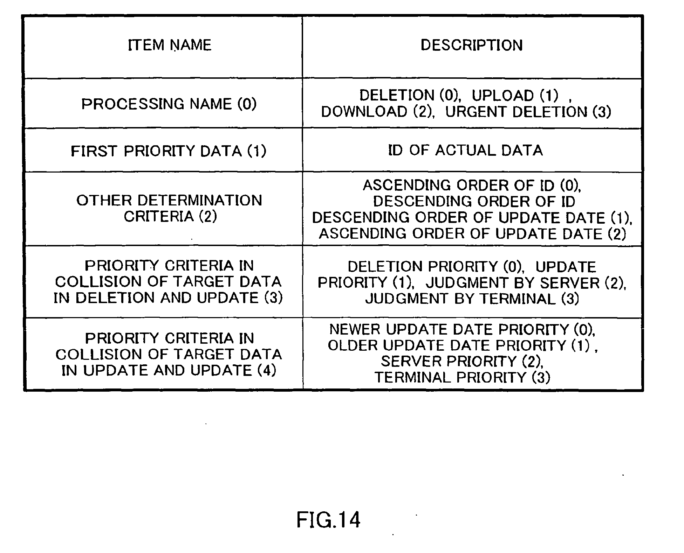

Specific examples of data policy data 311 will be described below with reference to FIGs.14 to 16.

FIG.14 shows the content of each item described in the data policy data. As items, there are a processing name, data with the first priority, determination criteria to determine priorities except the first one, priority criteria in target data collision of deletion and update, and priority criteria in target data collision of two updates. Each numeral inside parentheses is a value expressed in data.

Based on the data policy data, priorities of processing on a plurality of items of actual data 216 are determined. For example, when the data policy data is set for deleting actual data preferentially in descending order of confidential level, the security of data management is improved.

Further, since the information processing terminal determines target data and executes synchronization processing, it is possible to reduce loads on the server, as compared with the case where the server determines data to update every connection and takes the initiative in the synchronization processing.

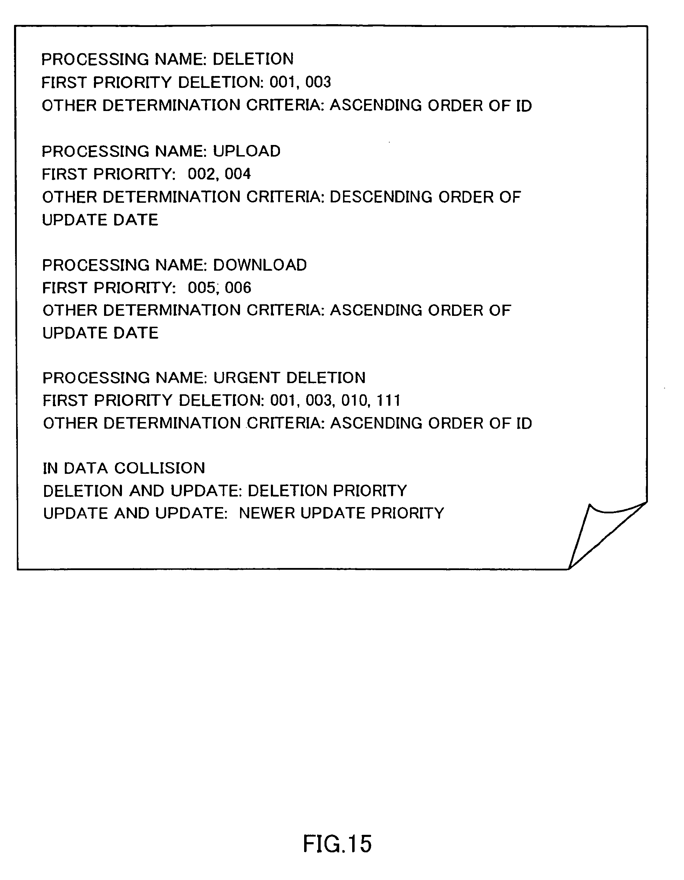

For example, FIG.16 shows actual data expressing the content as shown in FIG.15.

Key data 312 is an encryption key based on a common key encryption scheme to encrypt or decode actual data 216. When there is a plurality of keys, each key is assigned a number to be managed with number.

Time data 313 stores time information that time acquisition section 206 acquires from the server or time information counted by time count section 207. Further, in time data 313 are recorded the number of times acquisition of time information from the server fails successively, and an allowable maximum value of the number of times.

Each section will be described below.

Application operation section 203 is means for starting up applications except the MTA on terminal 101, and starts up applications issued by application issue section with the OS of the terminal.

Check section 204 is means for checking a current state of an application to start up or whether or not such an application is started, by referring to startup application list data 307.

Control section 205 is means for reporting a status of the check in check section 204 and determining an application to start up based on startup application list data 307. Further, control section 205 is means for acquiring a key for authentication embedded in the MTA. Furthermore, control section 205 is means for connecting to a provider and database server to use networks.

Time acquisition section 206 is means for acquiring time from a server that holds the time trusted on networks. Time acquisition section 206 notifies the acquired time to time count section 207 and IC card 102.

Time count section 207 is means for counting the current time based on the notified time from time acquisition section 206. Time count section 207 notifies the counted time to IC card 102.

Application issue section 218 is means for embedding a session key in the code of application data activated on terminal 101.

Decoding section 219 is means for decoding data using key data 312.

Data verification section 220 is means for calculating a hash value of data, and when necessary, comparing the calculated value with a hash value stored in component data 305 to verify tampering of the data.

Data synchronization section 208 communicates with server 103, and based on target data 306, uploads and downloads data such as actual data 216, data management application data 217, startup application list data 307, MTA data 309, and data policy data 311. Further, data synchronization section 208 notifies a status of the processing to IC card 102.

Data deletion section 209 deletes actual data 216 and data management application data 217 based on target data 306. Further, data deletion section 209 notifies a status of the processing to IC card 102.

Data verification section 210 is means for calculating a hash value of data, and when necessary, comparing the calculated value with a hash value stored in component data 305 to verify tampering of actual data 216. It is one of features of the invention that a reliable hash value can be calculated in terminal 101.

Target data determination section 211 is means for communicating with server 103, and determining data to download, upload and/or delete based on update information of the data in server 103, data of update date/time and expiration date/time of component data 305, data policy data 311 and target data 306. Further, target data determination section 211 notifies determined target data 306 to IC card 102.

Check section 212 is means for checking the remaining storage capacity of storage device 105, CPU load rate, etc, as status information of terminal 101 to notify control section 213.

Control section 213 in data management application 201 is means for determining operation of data management application 201 based on the notified information from check section 212 and target data 306.

Further, control section 213 is provided in data management application 201 and means for connecting to a provider and database server to use networks.

Encryption section 214 is means for encrypting data using key data 312.

Decoding section 215 is means for decoding data using key data 312.

Application issue section 302 is means for embedding a session key in the code of application data activated on terminal 101 to issue an application.

Authentication section 303 is means for performing authentication between server 103, terminal 101, MTA 200, data management application 201, or an application activated on terminal 101 and data management card application 301 of IC card 102, and further, used when IC card 102 establishes an SSL (Secure Socket Layer) session with server 103.

Card control section 304 is means for referring to, changing and deleting the content of data stored in card storage device 107 in IC card 102.

Card time count section 314 is means for counting elapsed time in IC card 102.

Further, since means in the same application on terminal 101 shares a memory space, data acquired or referred to by part of the means can be used by any other means.

Server 103, terminal 101 and IC card 102 share a key obtained in authentication, and encrypt a communication path when mutually communicating.

Time information and date/time data as described in the invention is expressed in year, month, minute and second at minimum, and may be changed in unit expression corresponding to a purpose of the use.

Flows of some processing executed in the secure data management apparatus will be described sequentially below.

The operation of terminal 101 will be described first.

When power of terminal 101 is turned on, MTA 200 is automatically started, and starts up other applications such as data management card application 301.

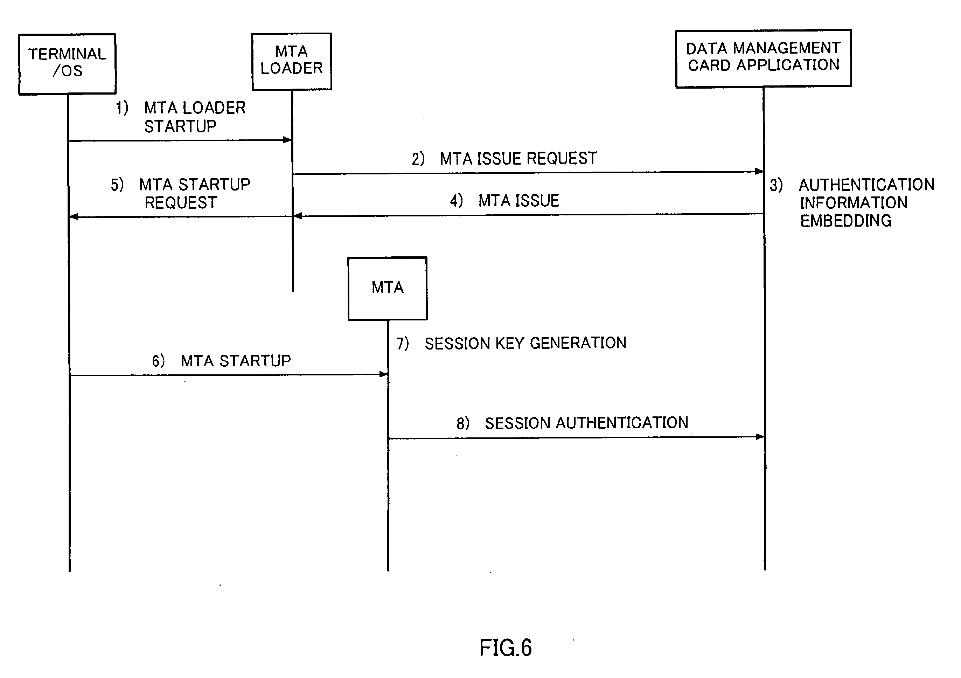

FIG.6 shows an MTA 200 startup flow.

The processing for starting up MTA 200 is executed between the OS of terminal 101, MTA loader, and data management card application 301. The MTA loader is an application of the terminal which requests an issue of MTA 200 to IC card 102 and starts up issued MTA 200.

When the power is turned on, the OS of terminal 101 starts up the MTA loader to load MTA 200 on terminal 101 (FIG.6-1))

The initiated MTA loader transmits a request for an issue of MTA 200 to data management card application 301 (FIG.6-2)).

Application issue section 302 of data management card application 301 embeds authentication information in the MTA for authentication and communication subsequent to startup of MTA 200 (FIG.6-3)).

Application issue section 302 of data management card application 301 issues MTA data to the MTA loader (FIG.6-4)).

The MTA loader makes a request for startup of received MTA 200 to the OS of terminal 101 (FIG.6-5)).

The OS of terminal 101 receives the MTA data and starts up MTA 200 (FIG.6-6)).

Control section 205 of initiated MTA 200 generates the session key from the embedded authentication information (FIG.6-7)).

Data management card application 301 similarly generates the session key from the authentication information, and control section 205 of MTA 200 and authentication section 303 of data management card application 301 perform authentication using generated session keys (FIG.6-8)).

The MTA 200 startup flow is as described in the foregoing.

Startup patterns of applications to start up on terminal 101 other than MTA 200 include a case of startup based on judgment of MTA 200 and another case of startup based on a request from a user.

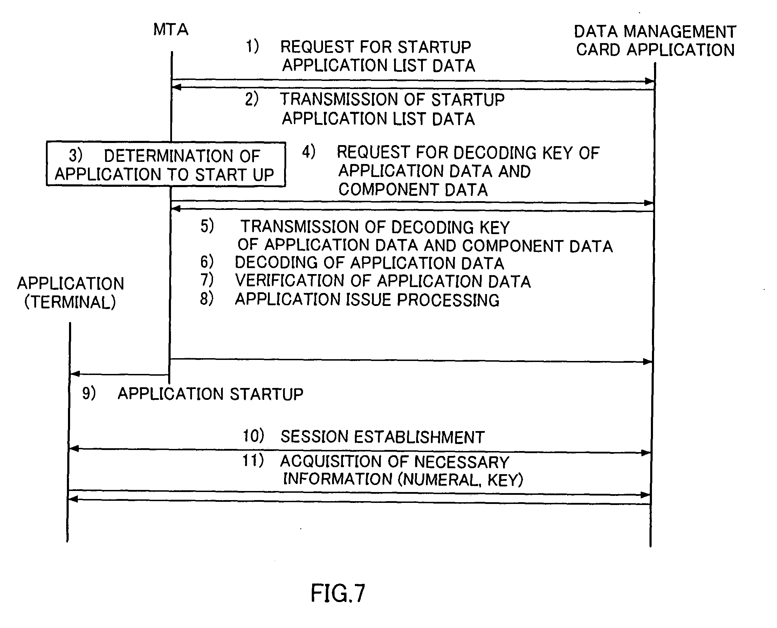

FIG.7 shows an application startup flow based on judgment of MTA 200.

The processing in this case is executed between MTA 200 and data management card application 301.

Control section 205 in MTA 200 requests startup application list data 307 to card control section 304 of data management card application 301 (FIG.7-1)).

Card control section 304 in data management card application 301 refers to startup application list data 307 stored in storage device 107, and transmits startup application list data 307 to control section 205 of MTA 200 (FIG.7-2)).

Check section 204 of MTA 200 checks an application currently activated in processing module 104 of terminal 101, and further checks activation states of applications described in startup application list data 307. As a result of the check, application operation section 203 of MTA 200 starts startup processing using an application which is described in startup application list data 307 and is not activated currently as an application to start up (FIG.7-3)).

Control section 205 of MTA 200 requests a key to decode an application to start and component data 305 describing a hash value to detect tampering to card control section 304 of data management card application 301 (FIG.7-4)).

Card control section 304 in data management card application 301 refers to component data 305 and a key number described in component data 305, further refers to key data 312 based on the referred key number, and transmits the key to decode the application to start, and component data 305 in which is described the hash value to detect tampering (FIG.7-5)).

Decoding section 219 of MTA 200 decodes application data using key data 312 (FIG.7-6)).

Data verification section 220 of MTA 200 calculates a hash value from the application data to compare with the hash value described in component data 305, and checks tampering of the application data (FIG.7-7)).

Application issue section 218 of MTA 200 generates a session key for authentication to embed in the application data, and issues the application. Then, control section 205 of MTA 200 provides the generated session key for authentication to card control section 304 of data management card application 301 (FIG.7-8)).

Application operation section 203 of MTA 200 executes startup processing of the issued application (FIG.7-9)).

A control section of the initiated application (i.e. control section 213 in the case of data management application 201) acquires the embedded session key, and establishes a session with authentication section 303 of data management card application 301 (FIG.7-10)).

The control section of the application having established the session requests data of an encryption key, decoding key and so on necessary for subsequent processing to card control section 304 of data management card application 301 to acquire (FIG.7-11) ) . In addition, a session key to be embedded in application data may be generated by application issue section 302, and provided to control section 205 in FIG.7-5).

The application initiated by MTA 200 normally operates during a period of time the session is established with IC card 102. In the case where the session is not established due to IC card 102 being removed, or the like, check section 212 detects such a case and finishes the application.

The application startup flow based on judgment of MTA 200 is as described in the foregoing.

There is a case that terminal 101 starts up an application based on request operation of a user.

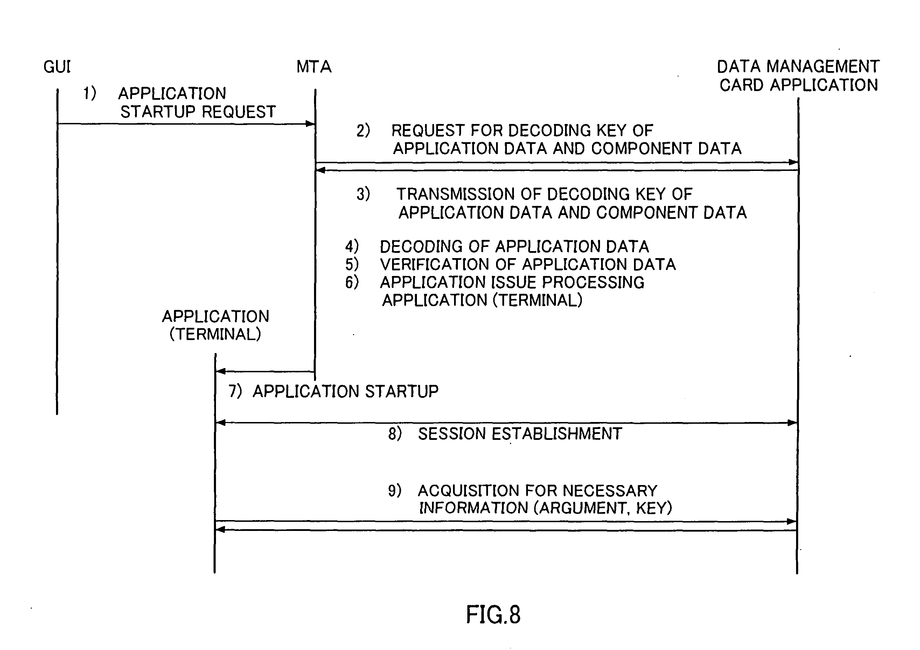

FIG.8 shows an application startup flow based on a request of a user.

The processing in this case is executed between an interface such as GUI used by a user, MTA 200 and data management card application 301.

The user requests startup of an application to start to application operation section 203 of MTA 200 via GUI, etc. (FIG.8-1)).

Control section 205 of MTA 200 requests a key to decode an application to start and component data 305 describing a hash value to detect tampering to card control section 304 of data management card application 301 (FIG.8-2)).

Card control section 304 of data management card application 301 refers to component data 305 and a key number described in component data 305, further refers to key data 312 based on the referred key number, and transmits the key to decode the application to start, and component data 305 describing the hash value to detect tampering (FIG.8-3) ) to control section 205 of MTA 200.

Decoding section 219 of MTA 200 decodes the application data using key data 312 (FIG.8-4)).

Data verification section 220 of MTA 200 calculates a hash value from the application data to compare with the hash value described in component data 305, and checks tampering of the application data (FIG.8-5)).

Application issue section 218 of MTA 200 generates a session key for authentication to embed in the application data, and issues the application (FIG. 8-6)).

Application operation section 203 of MTA 200 executes startup processing of the issued application (FIG.8-7)).

A control section of the initiated application acquires the embedded session key, and establishes a session with authentication section 303 of data management card application 301 (FIG.8-8)).

The control section of the application having established the session requests data of an encryption key, decoding key and so on necessary for subsequent processing to card control section 304 of data management card application 301 to acquire (FIG.8-9) ) . The control section described herein is control section 213 in the case of data management application 201. In addition, a session key to be embedded in application data may be generated by application issue section 302 and provided to control section 205 in FIG.8-3).

The application startup flow based on a request of a user is as described in the foregoing.

Startup application list data 307 describes data management application 201 as an application to start up, and data management application 201 is initiated by MTA 200 and is always activated.

Data management application 201 connects to a server when executing synchronization processing of data such as actual data 216.

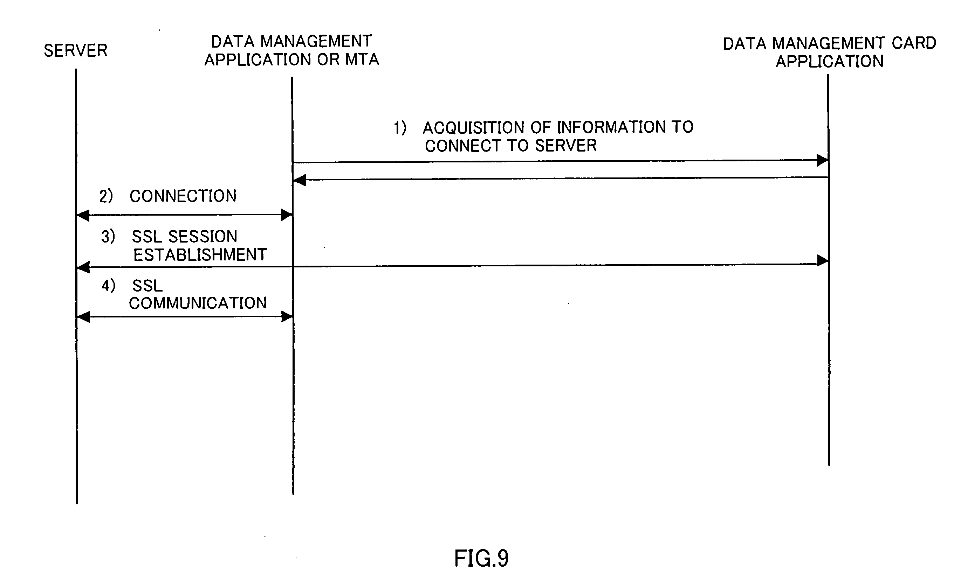

FIG.9 shows a flow to connect to a server.

The processing in this case is executed between server 103 where the database server is operating, data management application 201 and data management card application 301.

Control section 213 of data management application 201 requests information such as a URL to connect to the server to card control section 304 of data management card application 301 to acquire (FIG.9-1)).

Control section 213 of data management application 203 connects to the server based on the acquired information (FIG.9-2)).

The server and authentication section 303 of data management card application 301 establish an SSL session (FIG.9-3)).

The server and terminal 101 are capable of communicating with each other using the established session (FIG.9-4)).

The flow of connection is as described in the foregoing.

Data management application 201 lists data targeted for synchronization processing in target data 306 after connecting to the database server.

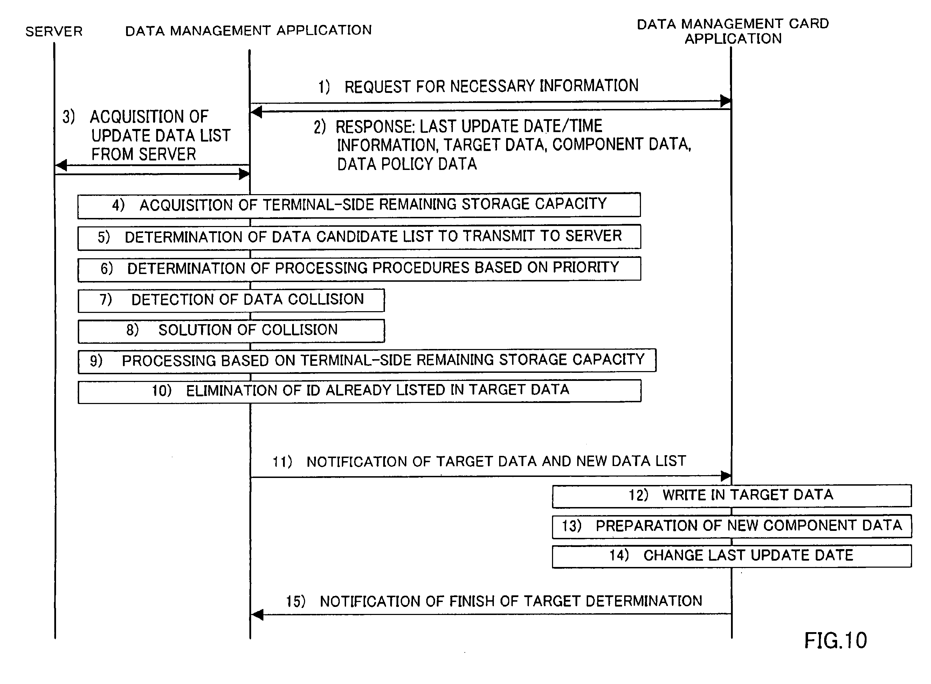

FIG.10 shows a flow to determine target data 306.

The processing in this case is executed between server 103, data management application 201 and data management card application 301.

Control section 213 of data management application 201 requests information necessary for the synchronization processing to card control section 304 of data management card application 301 (FIG.10-1)).

Card control section 304 of data management card application 301 refers to card storage device 107, and provides last update date/time data 308, target data 306, component data 305, and data policy data 311 to control section 213 of data management application 201 as a response (FIG.10-2)).

Target data determination section 211 of data management application 201 acquires an update data list from the server (FIG.10-3)). There are three types of update data lists. One is comprised of a list of IDs, update date/time and data sizes of data updated subsequent to the last update date/time. Another one is comprised of deletion requests and IDs of data. The other one is comprised of urgent deletion requests. Further, there are two kinds of urgent deletion requests. One contains only requests. The other one contains urgent deletion requests and a list of IDs of data. The urgent deletion will be described specifically later.

Check section 212 of data management application 201 checks storage device 105 of terminal 101 to acquire the remaining storage capacity (FIG.10-4)).

Target data determination section 211 of data management application 201 compares last update date/time data 308 with the update date/time of component data 305, and lists data that has been updated since the last update date/time as a candidate to transmit to server 103 (FIG.10-5)).

With respect to candidates for downloading from server 103, candidates for uploading to server 103, and candidates for deletion, target data determination section 211 of data management application 201 arranges the candidates in the processing order based on data policy data 311. An ID described as the first priority data is arranged at a beginning, and the other candidates are arranged in the processing order based on other determination criteria (FIG.10-6)).

Target data determination section 211 of data management application 201 detects an ID that is listed as a candidate for a plurality of processing and thus under collision from among the candidates for downloading from server 103, the candidates for uploading to server 103, and the candidates for deletion (FIG.10-7)).

Target data determination section 211 of data management application 201 determines processing on the ID under collision based on the priority in collision of data policy data 311 (FIG.10-8)).

The target data determination section of data management application 201 compares component data 305 with each ID of the update data list acquired from server 103, lists data that is not present as component data 305 as a new candidate for downloading, adds data sizes of candidates with IDs in the descending order of priorities for downloading from server 103, and limits IDs to a range accommodated in the remaining storage capacity (FIG.10-9)).

Target data determination section 211 of data management application 201 deletes an ID listed in target data 306 from the candidate list (FIG.10-10)).

By performing the processing as described in the foregoing, target data 306 is determined for downloading, uploading and deletion.

The target data determination section of data management application 201 notifies data management card application 301 of determined target data 306 and new data list (FIG.10-11)).

Card control section 304 of data management card application 301 updates target data 306 stored in card storage device 107 in IC card 102 (FIG.10-12)).

Card control section 304 of data management card application 301 stores component data 305 of the ID listed in the new data list in card storage device 107 in IC card 102 (FIG.10-13)).

Card control section 304 of data management card application 301 updates last update date/time data 308 stored in card storage device 107 in IC card 102 (FIG. 10-14)).

Card control section 304 of data management card application 301 notifies finish of target data determination to control section 213 of data management application 201, and finishes the processing for determining target data 306 (FIG.10-15)).

Herein, the first priority data, the other determination criteria and priorities in collision will be described specifically below with reference to FIGs.14 and 15.

When data with IDs 587, 107, 089, 007, 003 and 002 are listed as candidates for deletion and data with IDs 001 and 003 are further listed as deletion candidates based on the data policy data as shown in FIG.15, 003 is listed as the beginning of the target data so as to fast delete preferentially.

In terms of the other determination criteria, since the ascending order of ID is indicated, the processing priority is determined on IDs 002, 007, 089, 107 and 587 in this order. As a result, the processing order of IDs listed as deletion candidates is 003, 002, 007, 089, 107 and 587.

With respect to priorities in collision, FIG.14 shows data which is indicative of priority criteria when target data is collide in deletion and update and of priority criteria when target data is collide in update and update, and thus is criteria of whether to delete or update data when the data is listed as candidates for deletion target and update target and both processing cannot be executed. Since deletion is assigned a higher priority in the case of deletion and update, as shown in FIG.15, an ID of data only targeted for deletion is listed while the ID is eliminated from update candidates. In the case of update and update, since the new date is assigned a high priority, by comparing the update date obtained from the server with the update date of component data 305 corresponding to the target data, the ID is listed as a target for downloading when the data on the server side is newer, while being listed as a target for uploading when the data on the terminal side is newer.

The case will be described below that IDs 003, 002, 007, 089, 107 and 587 are listed as candidates for deletion and IDs 005, 002, 055, 107 and 258 are listed as candidates for downloading.

Based on FIG.15, since deletion is given a higher priority in deletion and update (downloading), the candidates for deletion are not changed. 002 and 107 are eliminated from the candidates for downloading, and 005, 055 and 258 are left.

The flow for determining target data 306 is as described in the foregoing.

When target data 306 for synchronization processing is determined, data management application 201 starts the synchronization processing.

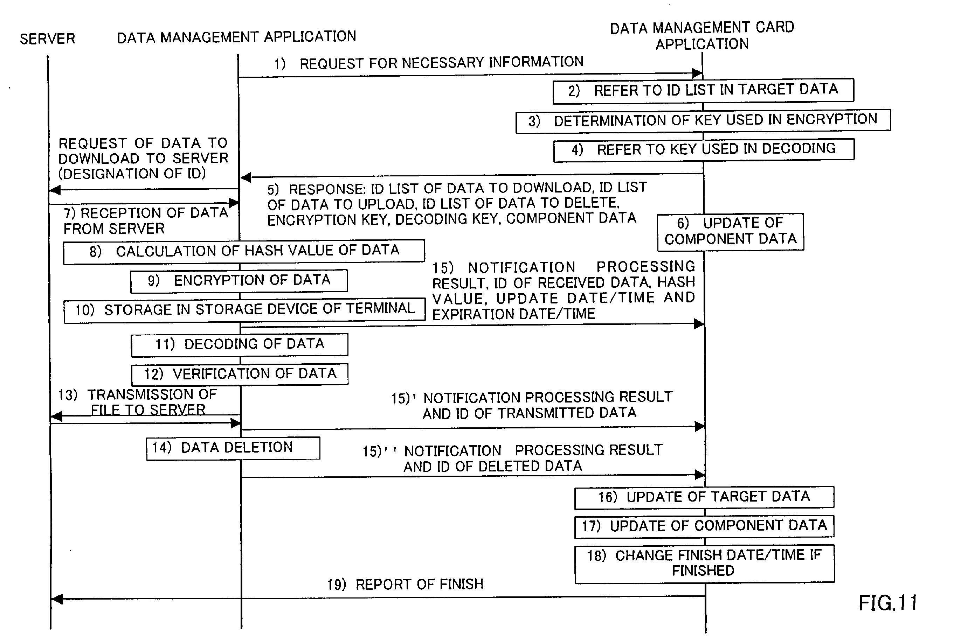

FIG.11 shows the data synchronization processing flow.

The processing in this case is executed between server 103, data management application 201 and data management card application 301.

Control section 213 of data management application 201 requests information necessary for execution of the synchronization processing to data management card application 301 (FIG.11-1)).

Card control section 304 of data management card application 301 refers to IDs of data targeted for downloading, uploading and deletion among target data 306 (FIG.11-2)).

Card control section 304 of data management card application 301 determines an encryption key corresponding to an ID of data to download among target data 306, and refers to key data 312 (FIG.11-3)).

Card control section 304 of data management card application 301 refers to component data 305 describing a hash value for use in detecting tampering of data to upload among target data 306, and further refers to component data 305 to obtain a key to decode actual data 216 from key data 312 (FIG.11-4)).

Card control section 304 of data management card application 301 sends back to data management application 201 an ID list of data to download, an ID list of data to upload, an ID list of data to delete, a key to encrypt, a key to decode and component data 305 as a response (FIG.11-5)).

After providing the response, card control section 304 of data management card application 301 updates a corresponding key number of component data 306 corresponding to the ID of actual data 216 to newly download (FIG.11-6)).

Control section 213 of data management application 201 having received the response starts either processing of downloading, uploading or deletion as appropriate. Herein, all the processing of downloading, uploading and deletion is described.

When downloading, data synchronization section 208 of data management application 201 requests data to download to server 103 while designating an ID of the data, and downloads the data from server 103 (FIG. 11-7) ) . At this point, the section 208 also downloads the update date/time and expiration date/time of the data.

Data verification section 210 of data management application 201 calculates a hash value of the downloaded data (FIG.11-8)).

Encryption section 214 of data management application 201 encrypts the downloaded data using a key to encrypt corresponding to the ID (FIG.11-9)).

Control section 213 of data management application 201 stores encrypted actual data 216 in storage device 105 of terminal 101 (FIG.11-10)).

Control section 213 of data management application 201 notifies card control section 304 of data management card application 301 of the result of the processing, and the ID, hash value, update date/time, and expiration date/time of the stored data, and card control section 304 of data management card application 301 having received the notification refers to target data 306 to judge whether data to download is still present (FIG. 11-15)).

Card control section 304 of data management card application 301 updates a state of processing of the downloaded actual data 216 to "processed" in target data 306 (FIG. 11-16) ) .

Card control section 304 of data management card application 301 updates the hash value and update date/time of component data 305 corresponding to the ID of the downloaded data (FIG. 11-17)).

When data to download is not present in target data 306, the finish date/time of target data 306 is updated (FIG. 11-18)).

Card control section 304 of data management card application 301 reports finish of the downloading processing and the ID of the downloaded data to server 103 (FIG.11-19)).

When uploading, decoding section 215 of data management application 201 decodes data to upload using a key to decode corresponding to the ID of actual data 216 (FIG.11-11)).

Data verification section 210 of data management application 201 calculates a hash value of the data to upload, and compares the calculated hash value with a hash value acquired from data management application 301 to verify whether the data is not tampered (FIG.11-12) ) .

There has conventionally been a case that an application to calculate a hash value is tampered and the hash value is not trusted. In the present invention, data verification section 210 of reliable data management application 201 initiated by MTA 200 calculates a hash value, and it is thereby possible to trust the result of data verification.

Data synchronization section 208 of data management application 201 designates an ID of actual data 216 and uploads the data to server 103 (FIG.11-13)).

Control section 213 of data management application 201 notifies card control section 304 of data management card application 301 of the result of the processing and the ID of uploaded actual data 216, and card control section 304 of data management card application 301 having received the notification refers to target data 306 to judge whether data to upload is still present (FIG.11-15)').

Card control section 304 of data management card application 301 updates a state of processing of the uploaded actual data 216 to "processed" in target data 306 (FIG.11-16)).

When data to upload is not present in target data 306, the finish date/time of target data 306 is updated (FIG.11-18)).

Card control section 304 of data management card application 301 reports finish of the uploading processing and the ID of the uploaded actual data 216 to server 103 (FIG.11-19)).

When deleting, data deletion section 209 of data management application 201 deletes actual data 216 corresponding to an ID listed in target data 306 from storage device 105 of terminal 101 (FIG.11-14)).

Control section 213 of data management application 201 notifies data management card application 301 of the result of the processing and the ID of deleted actual data 216, and card control section 304 of data management card application 301 having received the notification refers to target data 306 to judge whether data to delete is still present (FIG.11-15)" ) .

Card control section 304 of data management card application 301 updates a state of processing of the deleted actual data 216 to "processed" in target data 306 (FIG. 11-16) ) .

When data to delete is still present, the processing is continued, while the finish date/time of target data 306 is updated when such data is not present (FIG. 11-18) ) .

Card control section 304 of data management card application 301 notifies server 103 of finish of the deletion processing (FIG.11-19) ) . Further, it may be possible to report the ID of the deleted actual data 216. When the processing is finished, classified information such as key data and component data stored in memory by data management application 201 is erased from the memory.

In addition, the processing of FIG.11-16) to 19) is performed for each of downloading, uploading and deletion.

The data synchronization processing flow is as described in the foregoing.

There arises a need of deleting urgently actual data 216 stored in a terminal among a plurality of terminals which have been used to this point, when a user who has used the terminal up to this point becomes void or lost the terminal or unauthorized use of the terminal is detected.

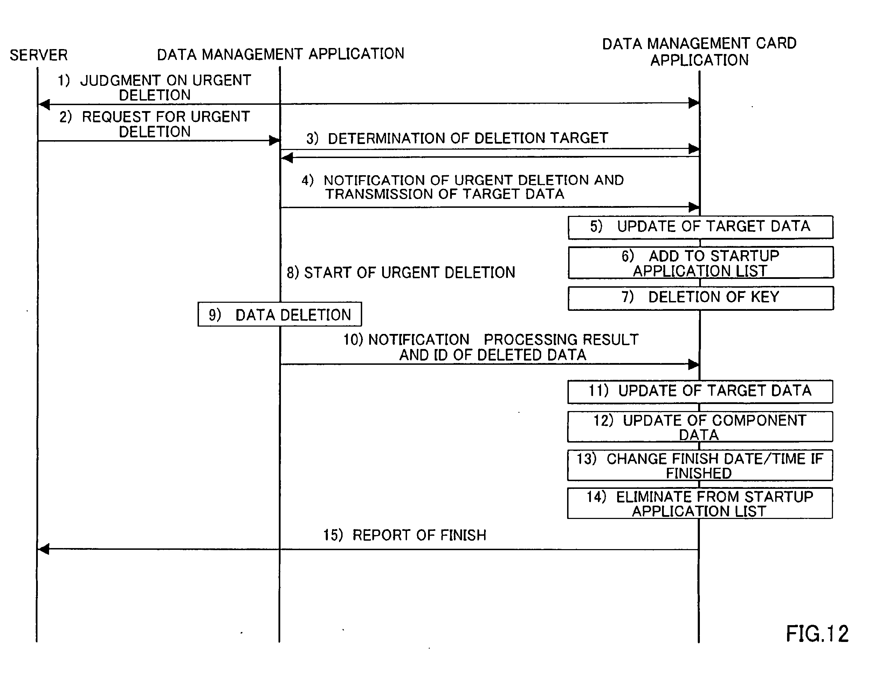

FIG.12 shows a data urgent deletion flow.

The processing in this case is executed between server 103, data management application 201 and data management card application 301.

Server 103 judges that data should be deleted urgently (FIG.12-1)).

Server 103 issues an urgent deletion command to target data determination section 211 of data management application 201 (FIG.12-2)).

There are two patterns of urgent deletion commands. One is to issue only an urgent deletion command. The other one is to issue the urgent deletion command and an ID list of data to delete.

In the case of only the urgent deletion command, target data determination section 211 of data management application 201 having received the command requests component data 305 and data policy data 311 to card control section 304 of data management card application 301, and determines an urgent deletion target and the processing priority (FIG.12-3)).

Control section 213 of data management application 201 notifies card control section 304 of data management card application 301 of urgent deletion and target data 306 (FIG.12-4)).

Card control section 304 of data management card application 301 updates target data 306 to add an urgent deletion target (FIG.12-5)).

Card control section 304 of data management card application 301 adds information of urgent deletion to startup application list data (FIG.12-6)).

Card control section 304 of data management card application 301 deletes key data 312 (FIG.12-7)).

Meanwhile, after notifying data management card application 301, data deletion section 209 of data management application 201 starts urgent deletion (FIG.12-8)).

Data deletion section 209 of data management application 201 deletes data corresponding to an ID targeted for the urgent deletion from storage device 105 of terminal 101 (FIG.12-9)).

Control section 213 of data management application 201 notifies card control section 304 of data management card application 301 of the result of the processing and the ID of the deleted data, and card control section 304 having received the notification refers to target data 306 to judge whether data to delete is still present (FIG.12-10)).

Card control section 304 of data management card application 301 updates a state of processing of the deleted actual data 216 to "processed" in target data 306 (FIG.12-11)).

Card control section 304 of data management card application 301 deletes component data 305 when necessary (FIG.12-12)).

When target data 306 to urgently delete is not present, the finish date/time of target data 306 is updated (FIG.12-13)).

Card control section 304 of data management card application 301 deletes information of the urgent deletion flag as appropriate from startup application list data 307 when necessary (FIG.12-14)).

Card control section 304 of data management card application 301 reports finish of the urgent deletion processing and the ID of the deleted data to server 103 (FIG. 12-15) ) . In this case, as amethod of deleting data, it is more efficient to write meaningless data such as "1" and "0" in the entire deletion targeted area.

Further, even when IC card 102 is removed during the urgent deletion processing, the deletion is still continued. Then, when the application for performing deletion is halted and IC card 102 is inserted again, since the urgent deletion flag of startup list data 307 is "ON", deletion is started on the data.

The urgent deletion flow is as described in the foregoing.

Further, actual data 216 is given an expiration date up to which the data can be used, and data management application 201 may delete data with the expired expiration date.

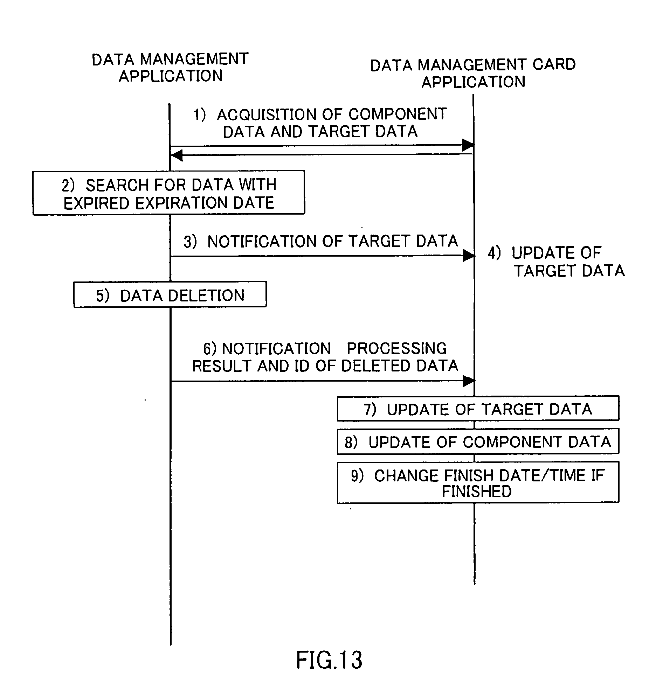

FIG.13 shows a flow of expiration date expired data deletion.

The processing in this case is executed between data management application 201 and data management card application 301.

Control section 213 of data management application 201 acquires component data 305 and target data 306 by requesting data management card application 301(FIG.13-1)).

Target data determination section 211 of data management application 201 compares expiration date information of component data 305 with current date/time information, and lists an ID of actual data 216 with the expired expiration date as data to delete (FIG.13-2)).

Control section 213 of data management application 201 notifies data management card application 301 of target data 306 (FIG.13-3)).

Card control section 304 of data management card application 301 updates target data 306 (FIG.13-4)).

Data deletion section 209 of data management application 201 deletes data corresponding to an ID targeted for the deletion from storage device 105 of terminal 101 (FIG. 13-5)).

Control section 213 of data management application 201 notifies data management card application 301 of the result of the processing and the ID of the deleted data (FIG.13-6)).

Card control section 304 of data management card application 301 sets a state of processing of the deleted ID of target data 306 for "processed" (FIG.13-7)).

Card control section 304 of data management card application 301 deletes component data 305 when necessary (FIG. 13-8)).

The processing is continued when target data 306 to delete is still present, while the finish date/time of target data 306 is updated when there is no data to delete (FIG.13-9)).

The flow of expiration date expired data deletion is as described in the foregoing.

Among actual data 216, the content of actual data such as customer list data and contract information is referred to by data management application 201, and displayed on a display of terminal 101.

A flow of referring to actual data 216 will be described below.

The processing in this case is executed between data management application 201 and data management card application 301.

Control section 213 of data management application 201 receives a reference request through user operation or from another application and an ID of reference-requested actual data, and requests a decoding key corresponding to the ID and component data 305 describing a hash value to card control section 304 of data management card application 301.

Card control section 304 of data management card application 301 refers to component data 305 corresponding to the ID of the requested actual data 216 and further refers to a corresponding key number.

Card control section 304 of data management card application 301 refers to key data 312 corresponding to the corresponding key number.

Card control section 304 of data management card application 301 provides to data management application 201 a key to decode and component data 305 describing the hash value as a response.

Decoding section 215 of data management application 201 decodes actual data 216 using the key to decode corresponding to the ID of the actual data 216.

Data verification section 210 of data management application 201 calculates a hash value of the actual data 216, and compares the calculated hash value with a hash value of component data 305 acquired from data management card application 301 to verify whether the data is not tampered. It is thereby possible to refer to the actual data 216.

At this point, control section 213 of data management application 201 may limit a range of data to be referred to, insert a user ID and/or time information as an electronic watermarking, or limit processing on referred data such as printing and storage, corresponding to a party that makes a reference request.

The flow for referring to actual data 216 is as described in the foregoing.

In Embodiment 1, as the current time for use in comparing time, reliable time is acquired using a mechanism as described below.

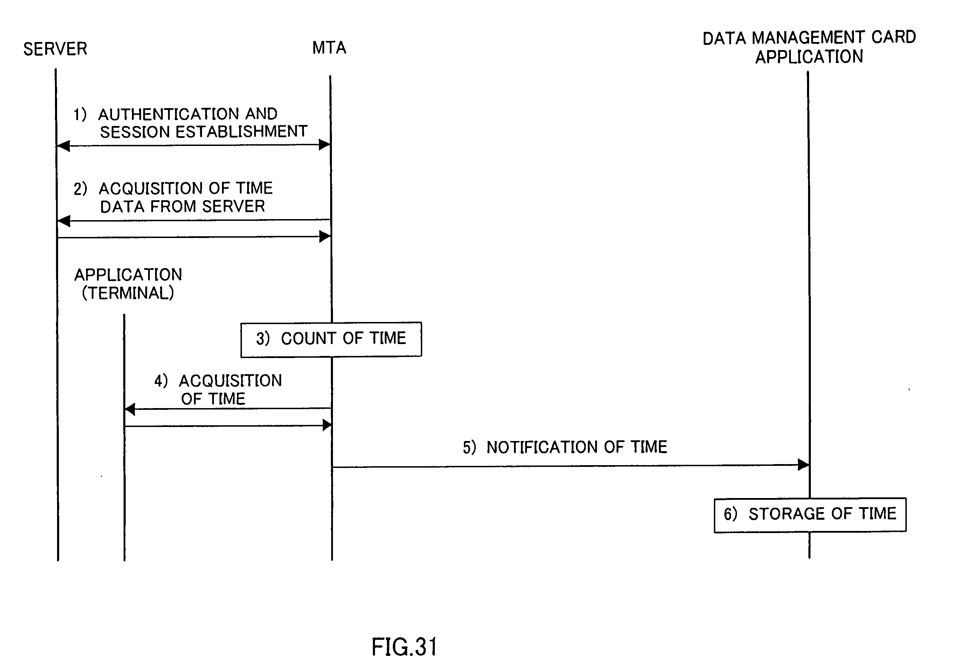

FIG.31 shows a flow to acquire and store reliable time.

The processing in this case is executed between server 103, MTA 200, data management card application 301 and an application operating on terminal 101.

Server 103 has time in synchronization with that of a reliable time server on the network, and provides correct time information to the terminal. While in this Embodiment server 103 provides time information to terminal 101, the terminal may receive the time information from a server provided with the function for similarly providing the time information or from a time server.

MTA 200 first establishes an SSL communication session with an activated server, thereby authenticates that the server is a server that provides correct time information, and establishes a secure session (FIG.31-1)).

Time acquisition section 206 of MTA 200 acquires the time information from the server (FIG.31-2)).

Time count section 207 of MTA 200 counts elapsed time, and using the acquired time information, calculates the current time (FIG.31-3) ) . Time count section 207 of MTA 200 continues to count the time until the power supply is turned off and MTA 200 is finished. The time counted by time count section 207 cannot be changed by a user or another application. Since reliableMTA200 continues to count the time, terminal 101 is capable of always keeping correct time.

When data management application 201 and another application activated on terminal 101 uses the current time, the application refers to MTA 200 and thus obtains reliable time (FIG.31-4)).

Further, MTA 200 notifies card control section 304 of data management card application 301 of the time acquired from the server and/or the counted time (FIG.31-5)).

Card control section 304 of data management card application 301 stores the notified time in card storage device 107 as time data 313 (FIG.31-6)).

There are three timings at which time information is notified to data management card application 301. One is immediately after the time information is acquired from the server. Another one is regular timing such as once an hour. The other one is event occurring timing at which another application makes a request for time.

As a method of using stored time data, there is a method as described below.

When the power supply of terminal 101 is once turned of f and time information cannot be acquired from the server at the next startup, MTA 200 verifies the time of terminal 101 using the time stored in IC card 102. When the time of terminal 101 is past than the time indicated by time data 313 in card storage device 107, control section 205 of MTA 200 judges that the time is changed improperly, and does not start up an application such as the data management application. By this means, it is possible to prevent expiration date expired actual data 216 and application from being used improperly by turning the clock back.

Further, when the time of terminal 101 is future than the time indicated by time data 313 of card storage device 107 and the difference is larger than a predetermined threshold, control section 205 of MTA 200 judges that the time is changed improperly, and does not start up an application such as the data management application in an offline state unless the time information is acquired again by connecting to the server. By this means, it is possible to prevent actual data 216 and application which is not made available yet from being used improperly by proceeding the time.

In time data 313 are descried the number of times acquisition of time information from the server fails successively, and an allowable maximum value of the number of times. The number of successive failure times is increment by one whenever acquisition of time information from the server fails, and is reset when the time information is acquired from the server. When the number of times exceeds the allowable maximum value, control section 205 of MTA 200 does not start up an application such as the data management application.

When acquisition of time information fails, the MTA notifies a user of the failure by, for example, displaying a message on a screen of terminal 101, and suggests the user to obtain an online state. By this way, it is also possible to connect terminal 101 and the server to be online with some frequency to maintain a state where data and time in terminal 101 is synchronized with the server.

Further, a case is considered that a clock of terminal 101 is tampered so that counted elapsed time delays than the actual elapsed time. There are following two methods as measures against such a case.

One is to use the time acquired from the server on the network. First, time acquisition section 206 acquires time information from the server. Time count section 207 counts the time for a predetermined time period, for example, one minute. After a lapse of one minute in time counted by time count section 207, time acquisition section 206 acquires time information from the server. Assuming that a difference in the time acquired by time acquisition section 206 is two minutes, by comparing the difference with one minute that is the predetermined time period, since it is understood that the actual elapsed time proceeds two times as fast as the time period, the method of counting the time in time count section 207 is subjected to correction such that two times of the elapsed time counted by time count section 207 is the actual elapsed time, and time count section 207 is thus capable of counting a lapse of time accurately. Further, there is another method that when a difference exists in elapsed time, the terminal is judged as an unauthorized terminal, and control section 205 halts or finishes the use of application.

As the other one, a method is considered of counting a correct lapse of time even in offline, using IC card 102. Time count section 207 counts the time during a predetermined time period, for example, one minute. At the same time, control section 205 requests card time count section 314 to start counting the time. After a lapse of one minute that is the predetermined time period in the time counted by time count section 207, control section 205 requests the elapsed time to card time count section 314. Assuming that the elapsed time counted in card time count section 314 is two minutes, by comparing the time with the predetermined time period (herein, one minute), since it is understood that the actual elapsed time is two times as much as the elapsed time counted by time count section 207, the method of counting the time in time count section 207 is subjected to correction such that two times of the elapsed time counted by time count section 207 is the actual elapsed time, and time count section 207 is thus capable of counting a lapse of time accurately even in offline. Further, in this case, there is such a method that card time count section 314 is set for the count time (herein, one minute), and correction is made after receiving a count finish notification from card time count section 314. Also in this case, there is another method that when a difference exists in elapsed time, the terminal is judged as an unauthorized terminal, and control section 205 halts or finishes the use of application.

### (Embodiment 2)

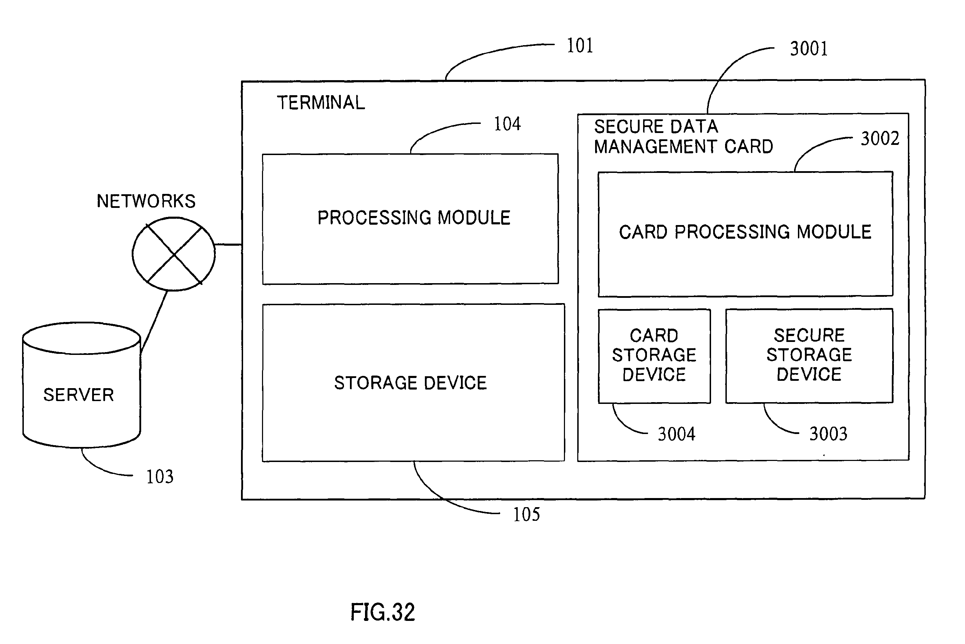

FIG.32 shows a system configuration illustrating a secure data management apparatus in Embodiment 2 of the present invention.

In Embodiment 2, secure data management card 3001 is used as a card. Secure data management card 3001 is a card having a larger storage capacity than that of general IC card 102. In Embodiment 2, data stored in storage device 105 of terminal 101 in Embodiment 1 is stored in secure data management card 3001.

The secure data management apparatus is comprised of terminal 101, secure data management card 3001 and server 103, and is an apparatus to securely manage data used in terminal 101.

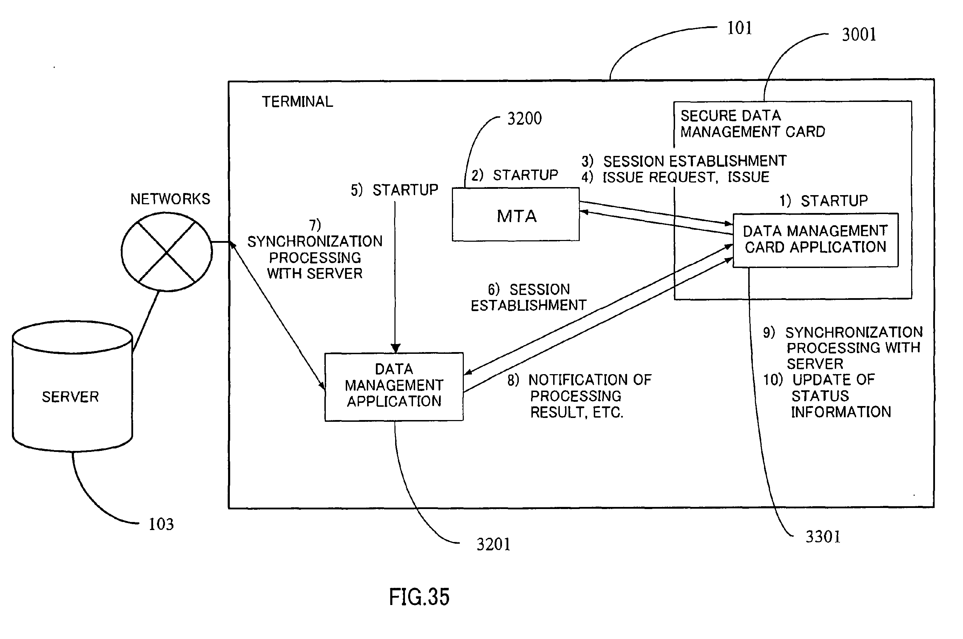

FIG.35 shows general outlines of processing in the secure data management apparatus.

General outlines of the purpose of the use of the secure data management apparatus are the same as those in Embodiment 1.

The processing flow will be described below.

When a power supply of terminal 101 is turned on, and secure data management card 3001 is inserted or already installed into/with terminal 101, data management card application 3301 starts up in secure data management card 3001 (FIG.35-1)).

In terminal 101, MTA 3200 issued from data management card application 3301 starts up (FIG. 35-2) ) . MTA 3200 performs authentication with data management card application 3301, and establishes a reliable session (FIG.35-3)).

MTA 3200 checks a state of terminal 101. In this case, since data management application 3201 does not start up, MTA 3200 makes a request for an issue of data management application 3201 to data management card application 3301. Data management card application 3301 issues data management application 3201 to MTA 3200 (FIG.35-4)). MTA 3200 having received the issue starts up data management application 3201 (FIG. 35-5)). At this point, data management application 3201 performs authentication with data management card application 3301, and establishes a reliable session (FIG.35-6)).

Activated data management application 3201 executes pre-processing of synchronization and synchronization processing with server 103 when necessary (FIG.35-7)). Data management application 3201 notifies data management card application 3301 of a result (such as a target for synchronization) of the pre-processing of synchronization, a result (such as success of downloading) of the synchronization processing and data (data itself to be actually synchronized) obtained in the synchronization processing (FIG.35-8)). Data managing card application 3301 executes processing such as update and deletion on the data obtained in the synchronization (FIG.35-9)).

Based on the processing results, data management card application 3301 updates status information (FIG.35-10)). The processing timings are the same as those in Embodiment 1.

The processing outlines of the secure data management apparatus are as described in the foregoing.

A configuration of terminal 101 is the same as that in Embodiment 1.

Secure data management card 3001 is comprised of card processing module 3002, secure storage device 3003 and card storage device 3004. Sever 103 is the same as that in Embodiment 1.

A hardware configuration of the present invention will be described more specifically below.

An internal configuration of terminal 101 is the same as that in Embodiment 1.

Secure storage device 3003 and card storage device 3004 of secure data management card 3001 are storage areas having tamper-resistance to which direct access is difficult from the outside, and is implemented by, for example, EEPROM.

An internal configuration of secure data management card 3001 will be described below.

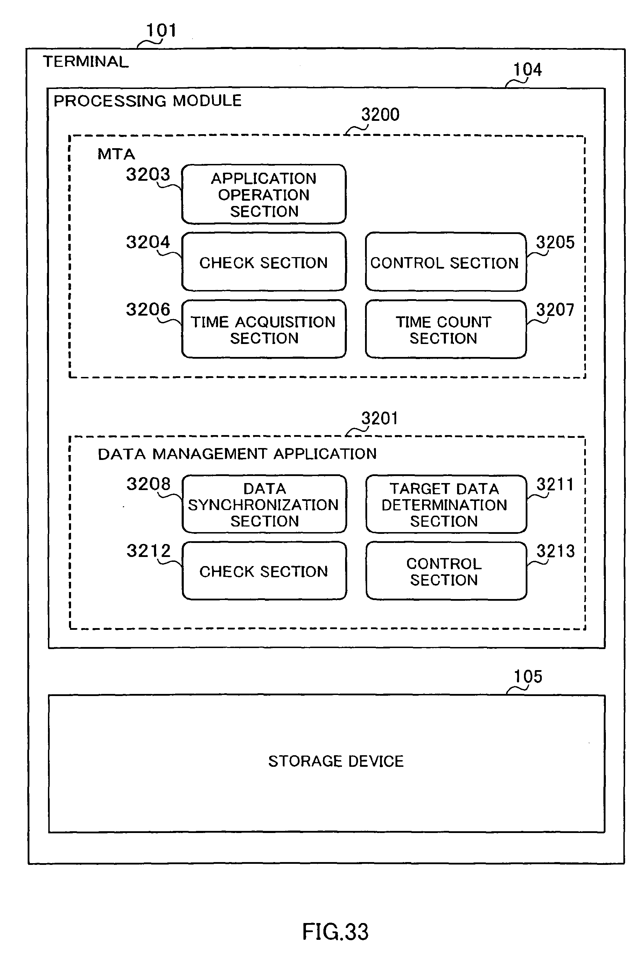

As shown in FIG.33, secure data management card 3001 is comprised of card processing module 3002, secure storage device 3003 and card storage device 3004.

Card processing module 3002 of secure data management card 3001 is comprised of a CPU, storage memory (ROM and RAM), and host interface (I/F) to communicate with the terminal, and each of secure storage device 3003 and card storage device 3004 is comprised of non-volatile memory such as EEPROM. Secure data management card 3001 is provided with tamper-resistance as a whole. Access to secure storage device 3003 is only obtained via card processing module 3002. Data stored in secure storage device 3003 is encrypted, and decoded when referred to. Since a file system of secure data management card 3001 performs encryption and decoding, it is not necessary to perform management on a key.

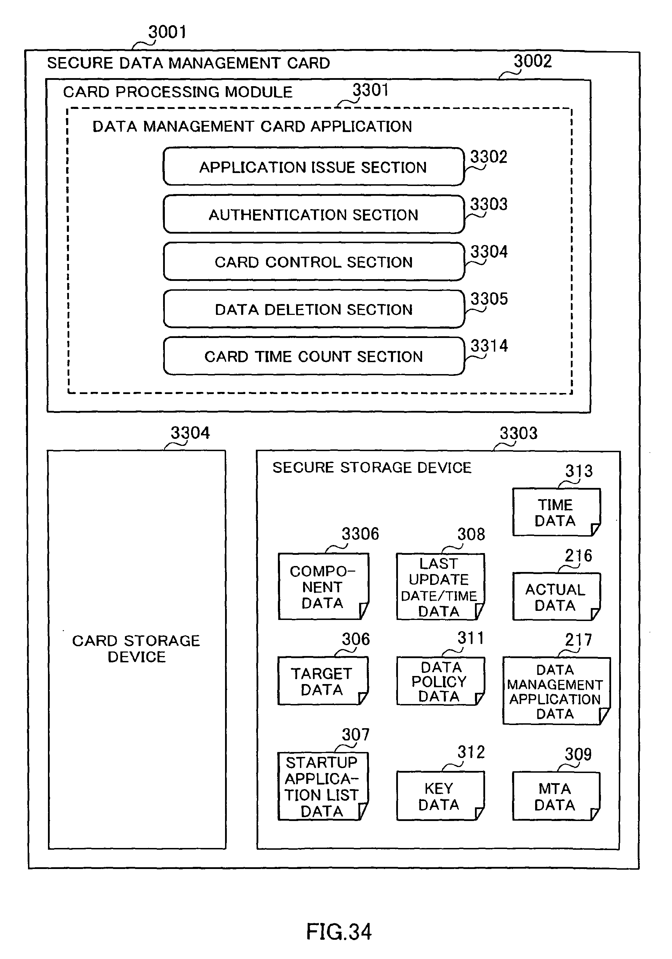

FIGs.33 and 34 show block diagrams to illustrate details of the secure data management apparatus in Embodiment 2.

FIG.33 is a functional block diagram of terminal 101. FIG.34 is a functional block diagram of secure data management card 3001.

Functions of processing module 104 of terminal 101 are the same as those in Embodiment 1 except a function of communicating with secure data management card 3001, instead of IC card 102.

In Embodiment 2, processing module 104 executes MTA 3200 and data management application 3201 as applications.

Outlines of functions of MTA 3200 are almost the same as those of MTA 200 in Embodiment 1. The processing flows differ in some points, and will be described specifically later.

MTA 3200 is comprised of application operation section 3203, check section 3204, control section 3205, time acquisition section 3206 and time count section 3207.

Outlines of data management application 3201 are the same as those of data management application 201 in Embodiment 1, except changes in processing flow due to the fact that actual data 216 is not stored in storage device 105 of terminal 101, and will be described later.

Data management application 3201 is comprised of data synchronization section 3208, target data determination section 3211, check section 3212 and control section 3213.

Functions of storage device 105 are the same as those in Embodiment 1.

In Embodiment 2, storage device 105 does not store data particularly.

Card processing module 3002 of secure data management card 3001 have the same functions as those of card processing module 106 in Embodiment 1.

In Embodiment 2, card processing module 3002 executes data management card application 3301 as an application.

Data management card application 3301 is comprised of application issue section 3302, authentication section 3303, card control section 3304, data deletion section 3305 and card time count section 3314.

Card storage device 3304 is a device to store data in secure data management card 3001, and has a feature that terminal 101 is capable of directly getting access to the device.

Card storage device 3004 does not store data.

Secure storage device 3303 is a device to store data in secure data management card 3001, and has a feature that access to the device is only allowed via card processing module 3002.

In Embodiment 2, secure storage device 3003 stores component data 3306, actual data 216, data management application data 217, target data 306, startup application list data 307, last update date/time data 308, MTA data 309, data policy data 311, key data 312 and time data 313.

Actual data 216, data management application data 217, target data 306, startup application list data 307, last update date/time data 308, MTA data 309, data policy data 311, key data 312 and time data 313 is the same as that in Embodiment 1.

Component data 3306 is the same as component data 305 in Embodiment 1, except two respects that a hash value is not described because actual data 216 is stored in secure storage device 3003 in secure data card 3001 and there are no risks of tampering and switching, and that a corresponding key number is not described either because the file system of secure data management card 3001 performs encryption and decoding of actual data 216.

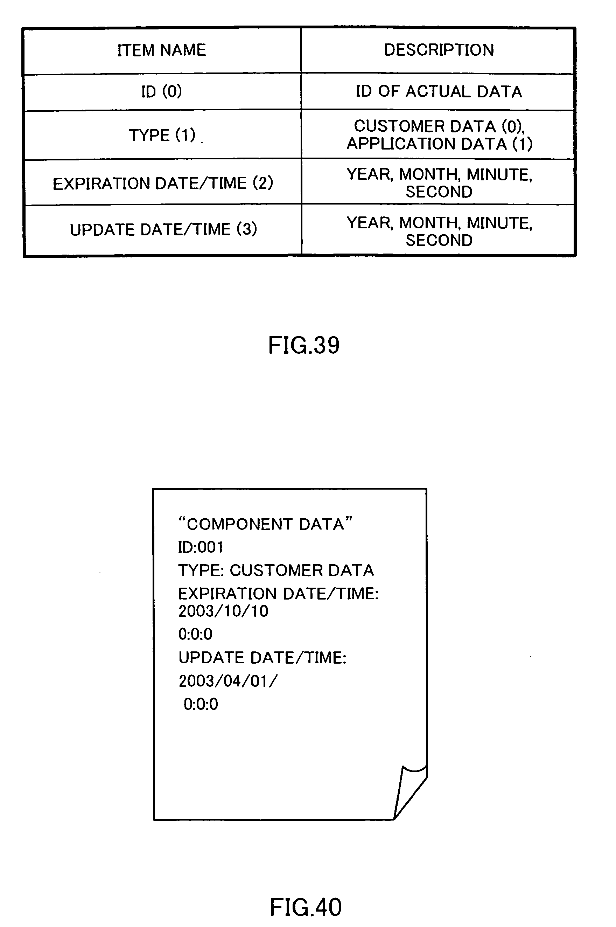

Specific examples of component data 3306 are shown in FIGs.39 to 43.

As shown in FIG.39, as items, there are an ID, type, expiration date/time, and update date/time. Each numeral inside parentheses is a value expressed in data.

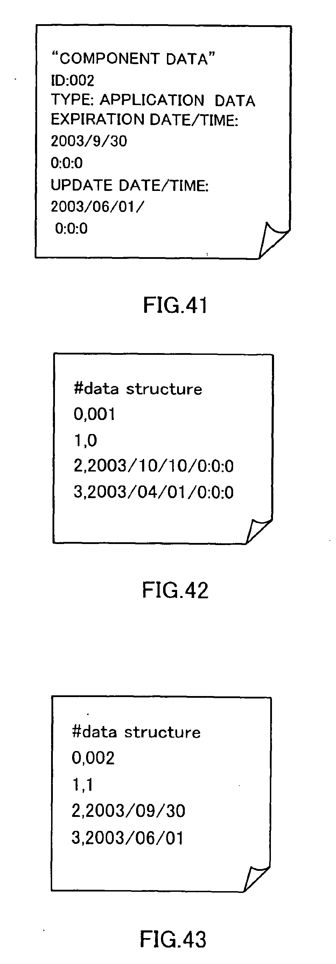

For example, FIG.42 shows data expressing the content as shown in FIG.40, while FIG.43 shows data expressing the content as shown in FIG.41.

Application operation section 3203 is means for starting up applications on terminal 101 using secure data management card 3001.

Check section 3204 is means for checking a current state of an application to start up or whether or not such an application is started, by referring to startup application list data 307.

Control section 3205 is means for reporting a status of the check in check section 3204 and determining an application to start up based on startup application list data 307. Further, control section 3205 is means for acquiring an embedded key for authentication. Furthermore, control section 3205 is means for connecting to a provider and/or database server to use networks.

Time acquisition section 3206 is means for acquiring time from a server that holds the time trusted on networks. Time acquisition section 3206 notifies the acquired time to time count section 3207 and secure data management card 3001.

Time count section 3207 is means for counting the current time based on the notified time from time acquisition section 3206. Time acquisition section 3206 notifies the counted time to secure data management card 3001.

Data synchronization section 3208 communicates with server 103, and based on target data 306, uploads and downloads data such as actual data 216, data management application data 217, startup application list data 307, MTA data 309, and data policy data 311. Further, data synchronization section 3208 notifies a status of the processing to secure data management card 3001.

Target data determination section 3211 is means for communicating with server 103, and determining data to download, upload and/or delete based on last update date/time data 308, update information of the data in server 103, data of update date/time and expiration date/time of component data 3306, data policy data 311 and target data 306. Further, target data determination section 3211 notifies determined target data 306 to secure data management card 3001.

Check section 3212 is means for checking remaining storage capacities of storage device 105 and secure storage device 3003, CPU load rate, etc, as status information of terminal 101 to notify control section 3213.

Control section 3213 in data management application 3201 is means for determining operation of data management application 3201 based on the notified information from check section 3212 and target data 306.

Further, control section 3213 is provided in data management application 3201 and means for connecting to a provider and database server to use networks.

Application issue section 3302 is means for embedding a session key in application data activated on terminal 101 to transmit to MTA 3200.

Authentication section 3303 is means for performing authentication between server 103, terminal 101, MTA 3200, data management application 3201, or an application activated on terminal 101 and data management card application 3301 of secure data management card 3001.

Card control section 3304 is means for referring to and changing the content of data stored in card storage device 3004 and secure storage device 3003 in secure data management card 3001.

Card time count section 3314 is means for counting elapsed time in secure data management card 3001.

Data deletion section 3305 deletes actual data 216 based on target data 306. Further, data deletion section notifies card control section 3304 of a status of the processing.

In addition, since means in the same application shares a memory space, data acquired or referred to by part of the means can be used by any other means.

Server 103, terminal 101 and secure data management card 3001 share a key obtained in authentication, and encrypt a communication path when mutuallycommunicating.

An MTA 3200 startup flow will be described below.

The processing for starting up MTA 3200 is executed between the OS of terminal 101, MTA loader, and data management card application 3301. The processing executed by MTA 200 in Embodiment is performed by MTA 3200. The processing executed by data management card application 301 in Embodiment 1 is performed by data management card application 3301.

The MTA 3200 startup flow is as described in the foregoing.

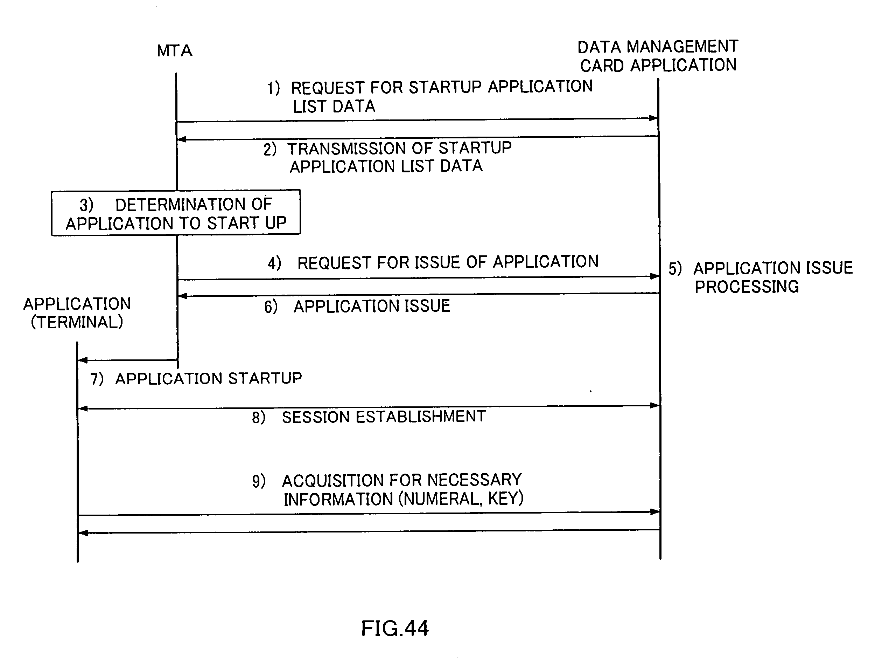

An application startup flow based on judgment of MTA 3200 will be described below with reference to FIG. 44.

The processing in this case is executed between MTA 3200 and data management card application 3301.

As distinct from Embodiment 1, original data of an application to start up is stored in secure storage device 3003, and therefore, the flow is different from that in Embodiment 1.

Control section 3205 inMTA3200 requests the startup application list data to card control section 3304 of data management card application 3301 (FIG.44-1)).

Card control section 3304 in data management card application 3301 refers to the startup application list data stored in secure storage device 3003, and transmits the startup application list data to control section 3205 of MTA 3200 (FIG.44-2)).

Check section 3204 of MTA 3200 checks an application currently activated in processing module 104 of terminal 101, and further checks activation states of applications described in the startup application list data. As a result of the check, application operation section 3203 of MTA 3200 starts startup processing using an application which is described in startup application list data 307 and is not activated currently as an application to start up (FIG.44-3)).

Application operation section 3203 of MTA 3200 requests an issue of an application to application issue section 3302 of data management card application 3301 (FIG.44-4)).

Application issue section 3302 of data management card application 3301 generates a session key for authentication to embed in the application data (FIG.44-5)).

Application issue section 3302 of data management card application 3301 issues the application to application operation section 3203 of MTA 3200 (FIG.44-6)) .

Application operation section 3203 of MTA 3200 executes startup processing of the issued application (FIG.44-7)).

A control section of the initiated application (i.e. control section 3213 in the case of data management application 3301) acquires the embedded session key, and establishes a session with authentication section 3303 of data management card application 3301 (FIG.44-8)).

The control section of the application having established the session requests data of an encryption key, decoding key and so on necessary for subsequent processing to card control section 3304 of data management card application 3301 to acquire (FIG.44-9)).

The application startup flow based on judgment of MTA 3200 is as described in the foregoing.

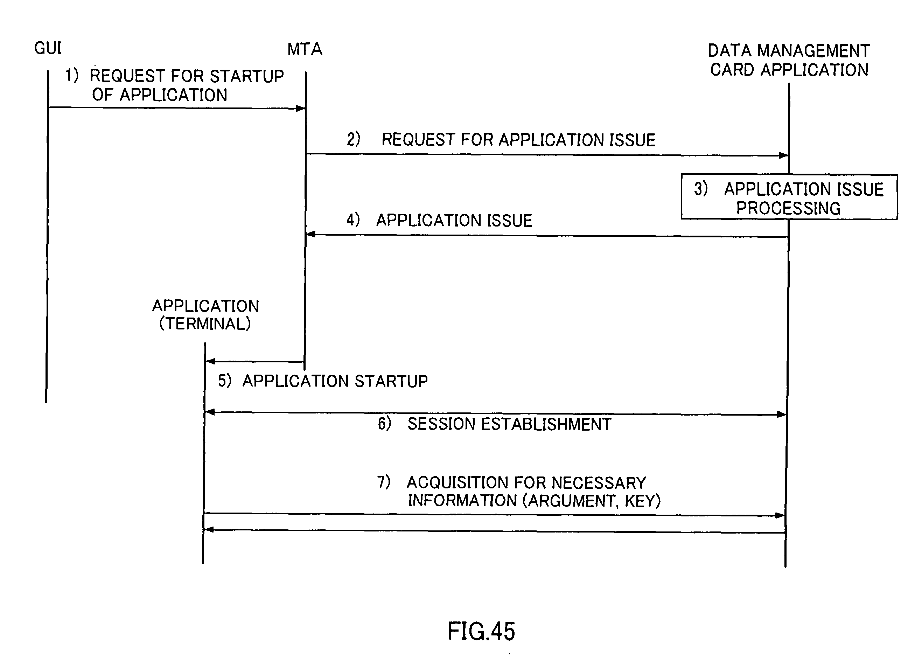

An application startup flow based on a request of a user will be described below with reference to FIG.45.

The processing in this case is executed between an interface such as GUI used by a user, MTA 3200 and data management card application 3301.

The user requests startup of an application to start to application operation section 3203 of MTA 3200 via GUI, etc (FIG.45-1)).

Application operation section 3203 of MTA 3200 requests an issue of the application to application issue section 3302 of data management card application 3301 (FIG.45-2)).

Application issue section 3302 of data management card application 3301 generates a session key for authentication to embed in the application data (FIG.45-3)).

Application issue section 3302 of data management card application 3301 issues the application to application operation section 3203 of MTA 3200 (FIG.45-4)).

Application operation section 3203 of MTA 3200 executes startup processing of the issued application (FIG.45-5)).

A control section of the initiated application (i.e. control section 3213 in the case of data management application 3301) acquires the embedded session key, and establishes a session with authentication section 3303 of data management card application 3301 (FIG.45-6)).

The control section of the application having established the session requests data of an encryption key, decoding key and so on necessary for subsequent processing to card control section 3304 of data management card application 3301 to acquire (FIG.45-7)).

The application startup flow based on user request is as described in the foregoing.

A flow of connection will be described below.

The processing in this case is executed between server 103, data management application 3201 and data management card application 3301.

As compared with Embodiment 1, control section 3213 substitutes for control section 3213, card control section 3204 substitutes for card control section 304, and in these respects, the processing is different from that in Embodiment 1.

The processing flow is the same as that in Embodiment 1.

A flow to determine target data 306 will be described below.

The processing in this case is executed between server 103, data management application 3201 and data management card application 3301.

As compared with Embodiment 1, component data 3306 substitutes for component data 305, control section 3213 substitutes for control section 213, card control section 3304 substitutes for card control section 3304, secure storage section 3003 substitutes for card storage device 107, target data determination section 3211 substitutes for target data determination section 211, check section 3212 substitutes for check section 212, check section 212 checks the remaining storage capacity of secure storage device 3003 of secure data management card 3001, instead of the remaining storage capacity of storage device 105 of terminal 101, and in these respects, the processing is different from that in Embodiment 1.

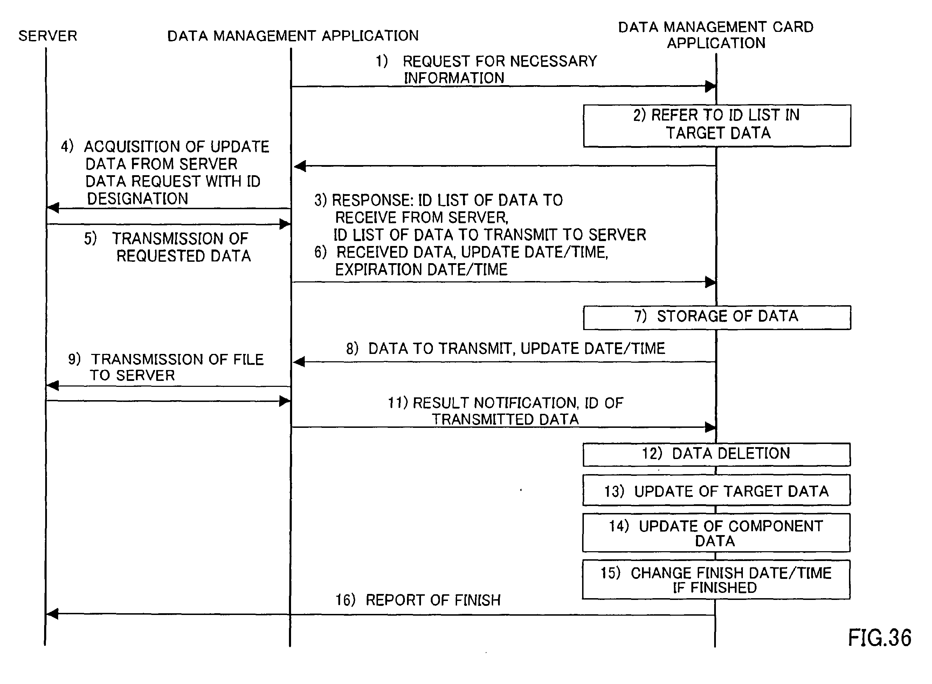

FIG.36 shows the data synchronization processing flow.

The processing in this case is executed between server 103, data management application 3201 and data management card application 3301.

Control section 3213 of data management application 3201 requests information necessary for execution of the synchronization processing to data management card application 3301 (FIG.36-1)).

Card control section 3304 of data management card application 3301 refers to IDs of data targeted for downloading, uploading and deletion among target data 306 (FIG.36-2)).

Card control section 3304 of data management card application 3301 sends back to data management application 3201 an ID list of data to download, an ID list of data to upload and an ID list of data to delete as a response (FIG.36-3)).

Control section 3213 of data management application 3201 having received the response starts either processing of downloading, uploading or deletion as appropriate. Herein, all the processing of downloading, uploading and deletion is described.

When downloading, data synchronization section 3208 of data management application 3201 requests data to download to server 103 while designating an ID of the data, and downloads the data from server 103 (FIG.36-4),5)). At this point, the section 3208 also downloads the update date/time and expiration date/time of the data.

Control section 3213 of data management application 3201 notifies card control section 3304 of data management card application 3301 of the received data, update date/time, and expiration date/time (FIG.36-6)).

Card control section 3304 of data management card application 3301 stores the received data as actual data 216 (FIG.36-7)).

Card control section 3304 of data management card application 3301 sets a state of processing of the ID of the downloaded data for "processed" in target data 306 (FIG.36-13)).

Card control section 3304 of data management card application 3301 updates the update date/time and expiration date/time of component data 3306 corresponding to the ID of the downloaded data (FIG.36-14)).

When target data 306 to download is still present, the processing is continued, while the finish date/time of target data 306 is updated when such data is not present in target data 306 (FIG.36-15)).

Card control section 3304 of data management card application 3301 reports finish of the downloading processing and the ID of the downloaded data to server 103 (FIG.36-16) ).

When uploading, data synchronization section 3208 of data management application 3201 requests update date/time of actual data 216 and component data 3306 to transmit to server 103 to card control section 3304 of data management card application 3301 to acquire (FIG.36-8)).

Data synchronization section 3208 of data management application 3201 designates an ID of actual data 216 and uploads the data to server 103 (FIG.36-9)).

Control section 3213 of data management application 3201 notifies card control section 3304 of data management card application 3301 of the result of the processing and the ID of uploaded actual data 216 (FIG.36-11)).

Card control section 3304 of data management card application 3301 updates a state of processing of the uploaded actual data 216 for "processed" in target data 306 (FIG.36-13)).

When target data 306 to upload is still present, the processing is continued, while such data is not present, the finish date/time of target data 306 is updated (FIG.36-15)).

Card control section 3304 of data management card application 3301 reports finish of the uploading processing and the ID of the uploaded actual data 216 to server 103 (FIG.36-16)).

When deleting, data deletion section 3305 of data management card application 3301 deletes actual data 216 corresponding to an ID listed in target data 306 from secure storage device 3303 (FIG.36-12)).

Card control section 3304 of data management card application 3301 updates a state of processing of the deleted actual data 216 to "processed" in target data 306 (FIG.11-16)). Further, the section 3304 deletes component data 3306 when necessary.

When target data 306 to delete is still present, the processing is continued, while the finish date/time of target data 306 is updated when such data is not present (FIG.36-15)).

Card control section 3304 of data management card application 3301 notifies server 103 of finish of the deletion processing. Further, the ID of the deleted actual data 216 may be reported together with the notification of finish of the deletion processing (FIG.36-16) ) .

The data synchronization processing flow is as described in the foregoing.

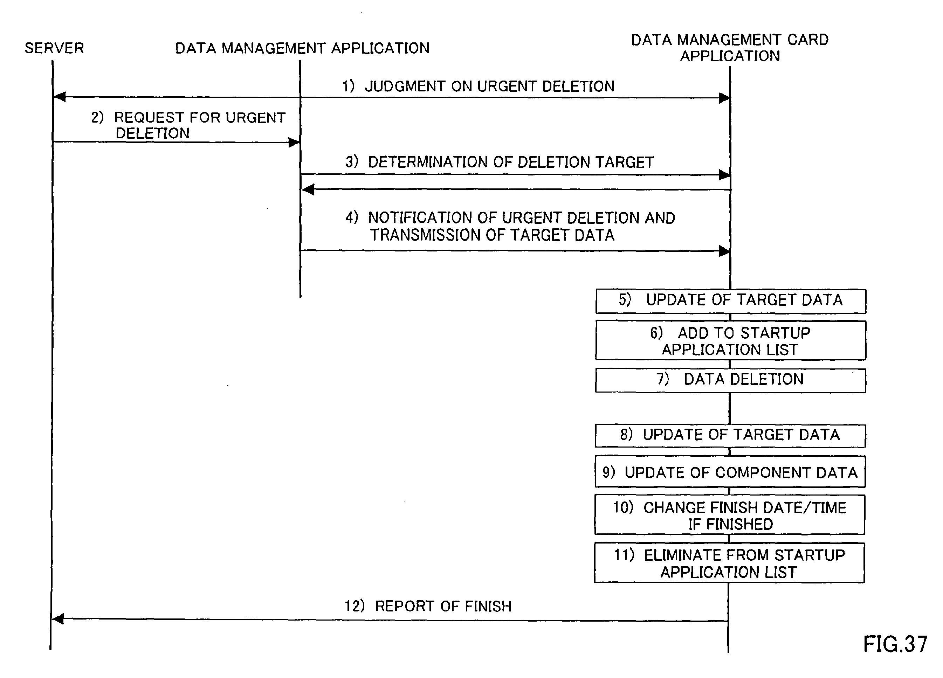

FIG.37 shows a flow at the time of urgent deletion.

The processing in this case is executed between server 103, data management application 3201 and data management card application 3301.

In this case, server 103 judges that data should be deleted urgently (FIG.37-1)).

Server 103 issues an urgent deletion command to target data determination section 3211 of data management application 3201 (FIG.37-2)).

There are two patterns of urgent deletion commands. One is to issue only an urgent deletion command. The other one is to issue the urgent deletion command and an ID list of data to delete.

In the case of only the urgent deletion command, target data determination section 3211 of data management application 3201 having received the command requests component data 3306 and data policy data 311 to card control section 3304 of data management card application 3301, and based on such data, determines a deletion target and the order of processing (FIG.37-3)).

Control section 3213 of data management application 3201 notifies card control section 3304 of data management card application 3301 of urgent deletion and target data 306 (FIG.37-4)).

Card control section 3304 of data management card application 3301 updates target data 306 to add urgent deletion target data (FIG.37-5)).

Card control section 3304 of data management card application 3301 sets an urgent deletion flag of the startup application list data to ON (FIG.37-6)). Deletion is performed inside the card, and in this respect, this Embodiment differs from Embodiment 1.

Data deletion section 3305 of data management card application 3301 deletes actual data 216 targeted for the urgent deletion from secure storage device 3303 (FIG.37-7)). Card control section 3304 of data management card application 3301 deletes key data. Further, card control section 3304 of data management card application 3301 sets a state of processing of the deleted actual data 216 for "processed" in target data 306 (FIG.37-8)).

Card control section 3304 of data management card application 3301 may delete component data 3306 (FIG.37-9)).

When target data 306 to delete is still present, the urgent deletion processing is continued, while the finish date/time of target data 306 is updated when such data is not present (FIG.37-10)).

Card control section 3304 of data management card application 3301 sets information of an urgent deletion flag to OFF in startup application list data 307 (FIG.37-11)).

Card control section 3304 of data management card application 3301 reports finish of the urgent deletion processing and the ID of the deleted data to server 103 (FIG.37-12)).

Since actual data 216 is stored in the card, the processing flow is different from that in Embodiment 1.

The flow at the time of urgent deletion is as described in the foregoing.

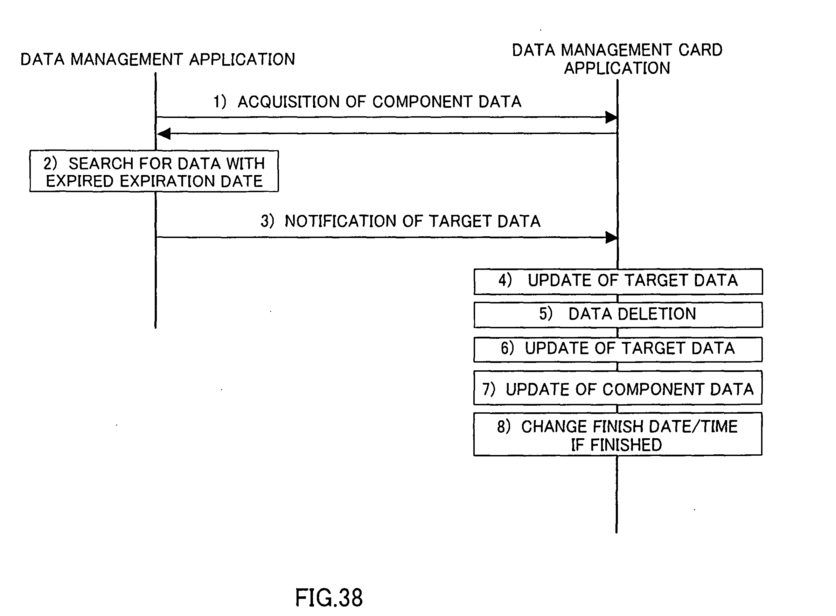

FIG.38 shows a flow of expiration date expired data deletion.

The processing in this case is executed between data management application 3201 and data management card application 3301.

Control section 3213 of data management application 3201 acquires component data 3306 by requesting data management card application 3301 (FIG.38-1)).

Target data determination section 3211 of data management application 3201 compares expiration date information of component data 3306 with current date/time information, and lists an ID of actual data 216 with the expired expiration date as target data to delete (FIG.38-2)).

Control section 3213 of data management application 3201 notifies card control section 3304 of data management card application 3301 of target data 306 (FIG.38-3)).

Card control section 3304 of data management card application 3301 updates target data 306 (FIG.38-4)).

Data deletion section 3305 of data management card application 3301 deletes data corresponding to an ID targeted for the deletion from secure storage device 3003 (FIG.38-5)).

Card control section 3304 of data management card application 3301 sets a state of processing of the deleted actual data 216 for "processed" in target data 306 (FIG.38-6)).

Card control section 3304 of data management card application 3301 deletes component data 3306 (FIG. 38-7)).

The processing is continued when target data 306 to delete is still present, while the finish date/time of target data 306 is updated when there is no data to delete (FIG.38-8)).

The flow of expiration date expired data deletion is as described in the foregoing.

A flow for referring to actual data 216 will be described below.

The processing in this case is executed between data management application 3201 and data management card application 3301.

Control section 3213 of data management application 3201 receives as a request an ID of actual data 216 to be referred to through user operation or from another application, and requests actual data 216 corresponding to the request to card control section 3304 of data management card application 3301.

Card control section 3304 of data management card application 3301 refers to actual data 216 in secure storage device 3003 to refer to actual data 216 corresponding to the ID.

Card control section 3304 of data management card application 3301 transmits actual data 216 to control section 3213 of the data management application.

The flow for referring to actual data 216 is as described in the foregoing.

The current time for use in comparison of time is obtained using a mechanism as described below.

A flow to acquire and store reliable time will be described below.

The processing in this case is executed between server 103, MTA 3200, data management card application 3301 and an application operating on terminal 101.

As compared to Embodiment 1, control section 3205 substitutes for control section 205, time acquisition section 3206 substituted for time acquisition section 206, time count section 3207 substitutes for time count section 207, card control section 3304 substitutes for card control section 304, secure storage device 3003 substitutes for card storage device 107, card time count section 3314 substitutes for card time count section 314, and in these respects, the processing is different from that in Embodiment 1.

As described above, by the use of the secure data management apparatus of the present invention, it is possible to perform synchronization processing, detection of tampering of data, urgent deletion of data, deletion of expiration date expired data, reference to data, and acquisition and count of current time with reliability, securityandassurance, using an application which operates on an information processing terminal and is trusted by a secure device.

The present invention is applicable to an information processing apparatus such as a cellular telephone, portable data assistance (PDA) and personal computer capable of being installed with a secure device such as an IC card and performing various applications and executes synchronization processing with a database server on networks.

The present invention is not limited to the above described embodiments, and various variations and modifications may be possible without departing from the scope of the present invention.

This application is based on the Japanese Patent Application No. 2003-307863 filed on August 29, 2003, entire content of which is expressly incorporated by reference herein.

## Claims

1. A secure data management apparatus comprised of a secure device (102) that executes storage and calculation of data in a confidential state, and an information processing terminal (101) to which the secure device (102) is attached, wherein the secure device (102) comprises:
a card processing module (106) that issues to the information processing terminal (101) an application (200) for controlling startup of an application that operates on the information processing terminal (101); and
a card storage device (107) that stores data of the application (200),
the information processing terminal (101) comprises a storage device (105) that stores actual data and data of a data management application (201) that manages the actual data, and starts up the application (200) issued by the secure device (102), the application (200) initiated and the secure device (102) mutually perform authentication, the application (200) authenticated by the secure device (102) starts up the data management application (201), the data management application (201) initiated and the secure device (102) mutually perform authentication, and the data management application (201) authenticated by the secure device (102) performs synchronization processing of the actual data with an external server (103).

2. The secure data management apparatus according to claim 1, wherein the application (200) or the data management application (201) comprises a check section (204) that checks whether the secure device (102) is attached to the information processing terminal (101), and when it is confirmed that the secure device (102) is not attached, finishes operation.

3. The secure data management apparatus according to claim 1, wherein the card storage device (107) stores the actual data and a hash value of the data management application (201), and the apparatus further comprises a data verification section (210) which calculates a hash value when the actual data or the data management application (201) is used, and compares the hash value calculated with the hash value stored in the card storage device (107) to check tampering of the actual data or data management application (201), respectively.

4. The secure data management apparatus according to claim 3, wherein the data management application (201) comprises a control section (213) that determines operation of the application (201) , the card processing module (106) comprises a card control section (304) processes the data stored in the card storage device (107), the data verification section (210) of the datamanagement application (201) calculates a hash value of actual data received from the server (103) in synchronization processing, the control section (213) of the data management application (201) transmits the hash value calculated by the data verification section (210) to the card control section (304) , and the card control section (304) stores the hash value transmitted from the control section (213) in the card storage device (107).

5. The secure data management device according to claim 1, wherein the data management application (201) comprises an encryption section (214) and a decoding section (215), the card storage device (107) stores encryption key data, and the actual data is encrypted by the encryption section (214) using the encryption key data stored in the card storage device (107) to be stored in the storage device (105), and when being decoded, decoded by the decoding section (214) using the encryption key data stored in the card storage device (107).

6. The secure data management apparatus according to claim 1, wherein the card storage device (107) stores startup application list data describing applications to start up on the information processing terminal (101), the data management application (201) is described in the startup application list data, the application (200) comprises an application operation section (203) that performs startup processing of another application on the information processing terminal (101), and the application operation section (203) refers to the startup application list data and maintains a state that the data management application (201) is always activated.

7. The secure data management apparatus according to claim 1, wherein the application (200) comprises an application issue section (218) that issues an application to start up on the information processing terminal (101), the data management application (201) comprises a control section (213) that determines operation of the application (200), the secure device (102) comprises an authentication section (303), the application issue section (218) embeds authentication information to perform authentication with the secure device (102) in the data of the data management application (201) stored in the storage device (105) and starts up the data management application (201), and the control section (213) of the data management application (201) initiated performs authentication with the authentication section (303) of the secure device (102).

8. The secure data management apparatus according to claim 1, wherein the data management application (201) comprises a target data determination section (211), a data synchronization section (208), a data deletion section (209) and a control section (213), the card processing module (106) comprises a card control section (304) that processes data stored in the card storage device (107), the target data determination section (211) generates or determines target data describing content of the synchronization processing of the actual data with the server (103), the control section (213) transmits the target data generated or determined by the target data determination section (211) to the card control section (304), the card control section (304) stores the target data transmitted from the control section (213) in the card storage device (107), the data synchronization section (208) performs the synchronization processing of the actual data with the server (103) based on the target data stored in the card storage device (107), and the data deletion section (209) deletes the actual data stored in the storage device (105) based on the target data stored in the card storage device (107).

9. The secure data management apparatus according to claim 8, wherein the card storage device (107) stores expiration date information indicative of an available limit of the actual data, and based on the expiration date information stored in the card storage device (107), the target data determination section (211) sets actual data which has an expired expiration date and should be deleted to target data as data to delete.

10. The secure data management apparatus according to claim 8, wherein the card storage device (107) stores data policy data describing priorities of processing types on the actual data and priorities of data for each of the processing types, and based on the data policy data stored in the card storage device (107), the target data determination section (211) generates or determines target data.

11. The secure data management apparatus according to claim 8, wherein the target data includes information indicative of a processing status of each processing, the control section (213) notifies information of a result of each processing to the card control section (304), and based on the information of processing result notified from the control section (213), the card control section (304) updates target data stored in the card storage device (107).

12. The secure data management apparatus according to claim 8, wherein the card storage device (107) stores an urgent deletion flag that urges urgent deletion processing, and when the urgent deletion flag stored in the card storage device (107) is ON, the target data determination section (211) generates or determines target data to preferentially delete.

13. The secure data management apparatus according to claim 5, wherein the data management application (201) comprises a control section (213) that determines operation of the application (201), and when an application operating on the information processing terminal (101) requests reference of the actual data, the control section (213) embeds date/time and/or a user ID as an electronic watermarking in actual data decoded by the decoding section (215), and transmits the actual data to the application.

14. A secure data management apparatus comprised of a secure device (102) that executes storage and calculation of data in a confidential state, and an information processing terminal (101) to which the secure device (102) is attached, wherein the secure device (102) comprises:
a card processing module (106) that issues to the information processing terminal (101) an application (200) for controlling startup of an application that operates on the information processing terminal (101); and
a card storage device (107) that stores data of the application (200),
the application (200) comprises:
a time acquisition section (206) that acquires current time from a server (103) on a network, and
a time count section (207) that counts current time on the information processing terminal (101),
the information processing terminal (101) starts up the application (200) issued by the secure device (102), the application (200) initiated and the secure device (102) mutually perform authentication, the time acquisition section (206) of the application (200) authenticated by the secure device (102) acquires the current time from the server (103) to set the time count section (207), and the time indicated by the time count section (207) is set as the current time.

15. The secure data management apparatus according to claim 14, wherein the application (200) comprises a control section (205), the time acquisition section (206) acquires the current time a plurality of times from the server (103) on the network, and the control section (205) compares elapsed time based on a difference from the current time acquired by the time acquisition section (206) with elapsed time indicatedby the time count section (207) to judge validity of the elapsed time indicated by the time count section (207), and when judging that the elapsed time is improper, halts an application operating on the information processing terminal (101).

16. The secure data management apparatus according to claim 14, wherein the secure device (102) comprises a card time count section (314) that counts time, the application (200) comprises a control section (205), and the control section (205) compares elapsed time indicated by the card time count section (314) of the secure device (102) with elapsed time indicated by the time count section (207) of the information processing terminal (101) to judge validity of the elapsed time indicated by the time count section (207) of the information processing terminal (101), and when judging that the elapsed time is improper, halts an application operating on the information processing terminal (101).

17. The secure data management apparatus according to claim 14, wherein the card processing module (106) comprises a card control section (304) that processes data stored in the card storage device (107), the application (200) comprises a control section (205), the card control section (304) stores current time in the card storage device (107) when the time acquisition section (206) of the application (200) acquires the current time from the server (103) on the network, and the control section (205) compares the current time stored in the card storage device (107) with current time indicated by the time count section (207) of the information processing terminal (101), when the application (200) is newly initiated and the time acquisition section (206) is not able to acquire current time from the server (103) on the network, to judge validity of the current time indicated by the time count section (207) of the information processing terminal, and when judging that the current time is improper, halts an application operating on the information processing terminal (101).

18. The secure data management apparatus according to claim 14, wherein the card processing module (106) comprises a card control section (304) that processes data stored in the card storage section (107), the application (200) comprises a control section (205), the control section (205) notifies the card control section (304) of failure when the time acquisition section (206) fails to acquire time information, the card control section (304) stores the number of failure times in the card storage device (107), and when the number of failure times stored in the card control section (304) exceeds the allowable number of times, the control section (205) halts an application operating on the information processing terminal (101).

19. A secure data management apparatus comprised of a secure device (3001) that executes storage and calculation of data in a confidential state, and an information processing terminal (101) to which the secure device (3001) is attached, wherein the secure device (3001) comprises:
a card processing module (3002) that issues to the information processing terminal (101) an application (3200) for controlling startup of an application that operates on the information processing terminal (101); and
a secure storage device (3003) that stores data of the application (3200), actual data and data of a data management application (3201) that manages the actual data,
the information processing terminal (101) starts up the application (3200) issued by the secure device (3001), the application (3200) initiated and the secure device (3001) mutually perform authentication, the application (3200) authenticated by the secure device (3001) starts up the data management application (3201), the data management application (3201) initiated and the secure device (3001) mutually perform authentication, and the data management application (3201) authenticated by the secure device (3001) performs synchronization processing of the actual data with an external server (103).

20. The secure data management apparatus according to claim 19, wherein the application (3200) or the data management application (3201) comprises a check section (3204) that checks whether the secure device (3001) is attached to the information processing terminal (101), and when it is confirmed that the secure device (3001) is not attached, finishes operation.

21. The secure data management apparatus according to claim 19, wherein the secure storage device (3003) stores startup application list data describing applications to start up on the information processing terminal (101), the data management application (3201) is described in the startup application list data, the application (3200) comprises an application operation section (3203) that performs startup processing of applications except the application (3200) on the information processing terminal (101), and the application operation section (3203) refers to the startup application list data and maintains a state that the data management application (3201) is always activated.

22. The secure data management apparatus according to claim 19, wherein the data management application (3201) comprises a control section (3213) that determines operation of the application (3200), the secure device (3001) comprises an application issue section (3302) that issues an application to start up on the information processing terminal (101) and an authentication section (3303), the application issue section (3302) embeds authentication information to perform authentication with the secure device (3001) in the data of the data management application (3201) stored in the secure storage device (3003) and starts up the data management application (3201), and the control section (3213) of the data management application (3201) initiated performs authentication with the authentication section (3303) of the secure device (3001).

23. The secure data management apparatus according to claim 19, wherein the data management application (3201) comprises a target data determination section (3211), a data synchronization section (3208) and a control section (3213), the card processing module (3002) comprises a data deletion section (3305) and a card control section (3304), the target data determination section (3211) generates or determines target data describing content of the synchronization processing of the actual data with the server (103), the control section (3213) transmits the target data generated or determined by the target data determination section (3211) to the card control section (3304), the card control section (3304) stores the target data transmitted from the control section (3213) in the secure storage device (3003), the data synchronization section (3208) performs the synchronization processing of the actual data with the server (103) based on the target data stored in the secure storage device (3003), and the data deletion section (3305) deletes the actual data stored in the secure storage device (3003) based on the target data stored in the secure storage device (3003).

24. The secure data management apparatus according to claim 23, wherein the secure storage device (3003) stores expiration date information indicative of an available limit of the actual data, and based on the expiration date information stored in the secure storage device (3003) , the target data determination section (3211) sets actual data which has an expired expiration date and should be deleted to target data as data to delete.

25. The secure data management apparatus according to claim 23, wherein the secure storage device (3003) stores data policy data describing priorities of processing types on the actual data and priorities of data for each of the processing types, and based on the data policy data stored in the secure storage device (3003), the target data determination section (3211) generates or determines target data.

26. The secure data management apparatus according to claim 23, wherein the target data includes information indicative of a processing status of each processing, the control section (3213) notifies information of a result of each processing to the card control section (3304) , and based on the information of processing result notified from the control section (3213), the card control section (3304) updates target data stored in the secure storage device (3003).

27. The secure data management apparatus according to claim 23, wherein the secure storage device (3003) stores an urgent deletion flag that urges urgent deletion processing, and when the urgent deletion flag stored in the secure storage device (3003) is ON, the target data determination section (3211) generates or determines target data to preferentially delete.

28. The secure data management apparatus according to claim 19, wherein the data management application (3201) comprises a control section (3213) that determines operation of the application (3201), and when an application operating on the information processing terminal (101) requests reference of the actual data, the control section (3213) embeds date/time and/or a user ID as an electronic watermarking in actual data, and transmits the actual data to the application.
